(19) Europäisches Patentamt
European Patent Office
Office européen des brevets

(11) **EP 3 188 392 B1**

(12) **EUROPEAN PATENT SPECIFICATION**

(45) Date of publication and mention
of the grant of the patent:
**14.11.2018  Bulletin 2018/46**

(51) Int Cl.:
*H04L 1/02* (2006.01)      *H04L 1/06* (2006.01)
*H04L 25/02* (2006.01)    *H04L 27/26* (2006.01)

(21) Application number: **14900355.0**

(22) Date of filing: **30.08.2014**

(86) International application number:
**PCT/CN2014/085635**

(87) International publication number:
**WO 2016/029482 (03.03.2016 Gazette 2016/09)**

(54) **DATA TRANSMITTING METHOD, CHANNEL ESTIMATION METHOD AND DEVICE**

DATENÜBERTRAGUNGSVERFAHREN, KANALSCHÄTZUNGSVERFAHREN UND VORRICHTUNG

PROCÉDÉ DE TRANSMISSION DE DONNÉES, PROCÉDÉ ET DISPOSITIF D'ESTIMATION DE CANAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.07.2017  Bulletin 2017/27**

(73) Proprietor: **HUAWEI TECHNOLOGIES CO., LTD.
Shenzhen Guangdong 518129 (CN)**

(72) Inventors:
• **ZHANG, Jiayin
  Shenzhen
  Guangdong 518129 (CN)**

• **ZHU, Jun
  Shenzhen
  Guangdong 518129 (CN)**

(74) Representative: **Epping - Hermann - Fischer
Patentanwaltsgesellschaft mbH
Schloßschmidstraße 5
80639 München (DE)**

(56) References cited:
**WO-A1-2012/112973    WO-A2-2011/071300
WO-A2-2011/136582    CN-A- 101 277 289
CN-A- 102 027 724    CN-A- 103 138 870
US-A1- 2010 067 599**

**Description**

**TECHNICAL FIELD**

This application relates to the field of communications technologies, and in particular, to a data sending method, a channel estimation method, and apparatuses thereof.

**BACKGROUND**

With rapid development of network technologies and mobile devices, a wireless local area network (English: Wireless Local Area Network, WLAN for short) technology based on the Institute of Electrical and Electronics Engineers (English: Institute of Electrical and Electronics Engineers, IEEE for short) 802.11 standard gains considerable development and wide application. There are mainly 802.11, 802.11b/g/a, 802.11n, 802.11ac, and 802.11ax that is in formulation. An orthogonal frequency division multiplexing (English: Orthogonal Frequency Division Multiplexing, OFDM for short) technology is used as a core technology at a physical layer in the standards other than 802.11 and 802.11b.

In coherent detection of an OFDM system, channel estimation needs to be performed. Channel estimation refers to a process in which a parameter of a channel passed through by a transmit signal is obtained by performing estimation according to a received signal by using a criterion. In the 802.11n and 802.11ac standards, a multiple-input multiple-output (English: Multi-input Multi-output, MIMO for short) technology is used to improve a channel capacity, increase a system scope, and improve reliability. A received signal is a superposed signal of multiple transmit signals, where these transmit signals are simultaneously transmitted by multiple transmit antennas and almost synchronously reach a receive antenna. Therefore, a channel estimation algorithm of a MIMO system is more complex than that of a single-antenna system.

To correctly identify multiple transmit signals in one superposed signal, channel features of multiple parallel channels from transmit antennas to a same receive antenna need to be estimated by using a channel estimation algorithm.

A common ground shared by the foregoing WLAN standards in which the OFDM technology is used as a core technology is that a method for generating a long training field (English: Long

Training Field, LTF for short) that can be used for channel estimation is specified for a physical layer, and the LTF includes one or more symbols. The symbol is, for example, an orthogonal frequency division multiplexing (English: Orthogonal Frequency Division Multiplexing, OFDM for short) symbol. A long training sequence (English: Long Training Sequence, LTS for short) may be carried in a frequency domain of the symbol.

In a MIMO scenario, if the LTF includes only one symbol, after receiving the symbol, a receive end cannot distinguish between symbols corresponding to multiple spatial flows, and therefore, cannot perform channel estimation.

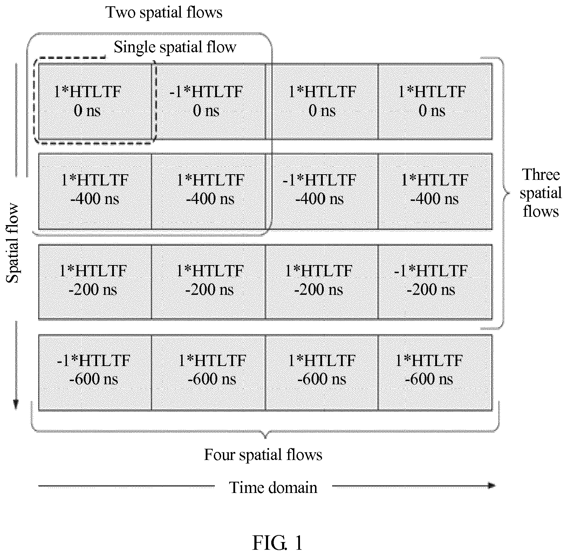

Therefore, to implement MIMO channel estimation, in the 802.11n standard, in a high throughput long training field (English: High Throughput LTF, HT-LTF for short), a single symbol is extended in a time domain by using an orthogonal code word. As shown in FIG. 1, FIG. 1 shows symbol structures in four cases from a single spatial flow to four spatial flows. In a case of four spatial flows, an orthogonal mapping matrix formed by orthogonal code words is shown as follows: $P_{HTLTF} = \begin{pmatrix} 1 & -1 & 1 & 1 \\ 1 & 1 & -1 & 1 \\ 1 & 1 & 1 & -1 \\ -1 & 1 & 1 & 1 \end{pmatrix}$ It may be seen from FIG. 1 that for a single spatial flow, an LTF needs to include only one symbol. For two spatial flows, included symbols are first two symbols in the first row and first two symbols in the second row. However, the first symbol in the first row and the first symbol in the second row are superposed in a time domain but are transmitted by different antennas. Likewise, the second symbol in the first row and the second symbol in the second row are superposed in a time domain. Therefore, an LTF needs to include two symbols. Therefore, in a case of two spatial flows, two symbols are sent in each spatial flow. Similarly, if three spatial flows are simultaneously sent and four spatial flows are simultaneously sent, four symbols need to be sent in each spatial flow.

In the 802.11ac standard, a very high throughput long training field (English: Very HT-LTF, VHT-LTF for short) is generated by using the same method, and channel estimation is performed on multiple spatial flows in a MIMO scenario by using the generated VHT-LTF.

The foregoing method for generating an LTF is simple. However, system overheads are relatively high. For example, when an access point (English: Access Point, AP for short) simultaneously sends eight spatial flows, eight symbols need to be sent in each spatial flow, which causes a relatively low system throughput.

WO 2011/071300 A2 discloses a method of transmitting a training signal in a Wireless Local Area Network (WLAN) system, which includes generating one or more first training signals for a first destination station and one or more second training signals for a second destination station by applying a mapping matrix P to a training signal generation sequence, mapping the first training signals and the second training signals to a plurality of antennas according to an antenna mapping matrix, and performing Inverse Fast Fourier Transform (IFFT) on each of the first training signals and the second training signals mapped to the plurality of antennas and transmitting the training signals through the plurality of antennas.

## SUMMARY

This application provides a data sending method, a channel estimation method, and apparatuses thereof according to the attached claims to resolve a technical problem in the prior art that a method for generating a long training field causes relatively high system overheads.

One or more technical solutions provided in the embodiments of this application have at least the following technical effects or advantages:

In the embodiments of this application, Fourier transform is performed on a first time domain sequence with an autocorrelation property to obtain a first frequency domain sequence; a maximum quantity of spatial flows that can be supported by a single symbol is determined according to a maximum multipath delay of a channel, bandwidth of the channel, and a subcarrier quantity; then, a cyclic shift parameter corresponding to each spatial flow is determined in a parameter configuration table according to a total quantity of spatial flows, where the cyclic shift parameter represents a time sequence shift value of the first time domain sequence; and then, an LTF is obtained according to the first frequency domain sequence, the maximum quantity of spatial flows, and the cyclic shift parameter. Therefore, in the embodiments, a sequence with an autocorrelation property is used as a sequence used for an LTF. Then, symbols used for spatial flows in a multi-spatial-flow scenario are distinguished by using different cyclic shift parameters. Two spatial flows may be distinguished by performing at least one time of shift. Therefore, for eight spatial flows, only a maximum of four symbols need to be sent in each spatial flow. Therefore, according to the methods in the embodiments, channel estimation may be implemented, where a quantity of symbols that need to be sent in each spatial flow is less than a quantity of symbols that are sent in the prior art, so as to reduce system overheads, and in particular, reduce system overheads in a parameter configuration with a relatively large quantity of subcarriers and a relatively long guard interval.

## BRIEF DESCRIPTION OF DRAWINGS

FIG. 1 is a schematic structural diagram of symbols in an LTF according to the prior art;
FIG. 2 is a flowchart of a data sending method on a transmit end side according to an embodiment of this application;
FIG. 3 is a flowchart of a channel estimation method on a receive end side according to an embodiment of this application;
FIG. 4 is a block diagram of functions of a data sending apparatus according to an embodiment of this application;
FIG. 5 is a schematic diagram of hardware of a transmit-end device according to an embodiment of this application;
FIG. 6 is a block diagram of functions of a channel estimation apparatus according to an embodiment of this application; and
FIG. 7 is a schematic diagram of hardware of a receive-end device according to an embodiment of this application.

## DESCRIPTION OF EMBODIMENTS

Embodiments of this application provide a data sending method, a channel estimation method, and apparatuses thereof to resolve a technical problem in the prior art that a method for generating a long training field causes relatively high system overheads.

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are merely a part rather than all of the embodiments of this application. All other embodiments obtained by a person of ordinary skill in the art based on the embodiments of this application without creative efforts shall fall within the protection scope of this application.

The station mentioned in this specification may also be referred to as an access terminal, a system, a subscriber unit, a subscriber station, a mobile station, a mobile station, a remote station, a remote terminal, a mobile device, a user terminal, a terminal, a wireless communications device, a user agent, a user apparatus, UE (User Equipment, user equipment), or the like. The station may be a cellular phone, a cordless phone, a SIP (Session Initiation Protocol, Session Initiation Protocol) phone, a WLL (Wireless Local Loop, wireless local loop) station, a PDA (Personal Digital Assistant, personal digital assistant), a handheld device having a wireless communication function, a computing device, or another processing device connected to a wireless modem.

In addition, the wireless local area network access point in this specification may be an independent access point that uses a WLAN (Wireless Local Area Network, wireless local area network) technology; or may be integrated into an existing base station, for example, integrated into: a BTS (Base Transceiver Station, base transceiver station) in GSM (Global System for Mobile Communications, Global System for Mobile Communications) or CDMA (Code Division Multiple Access, Code Division Multiple Access); or may be integrated into an NB (NodeB, NodeB) in WCDMA (Wideband Code Division Multiple Access, Wideband Code Division Multiple Access); or may be an eNB or an eNodeB (evolved Node B, evolved NodeB) in LTE (Long Term Evolution, Long Term Evolution), or a relay station or an access point, or a base station device in a future 5G network; or the like.

In addition, the character "/" in this specification generally indicates an "or" relationship between the associated objects.

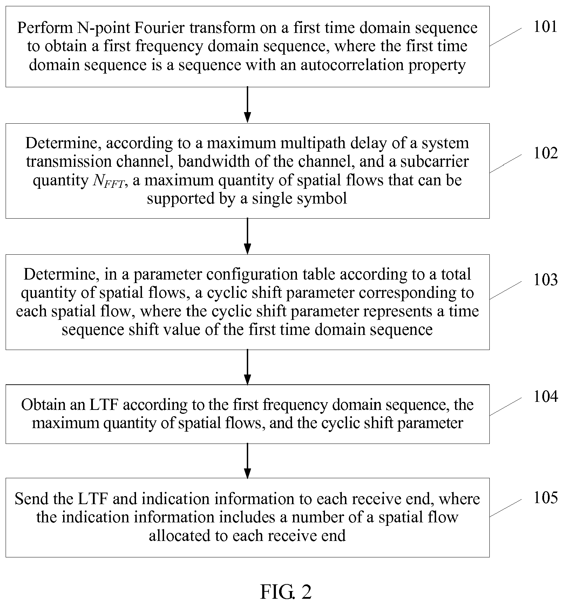

This embodiment provides a data sending method that is used for interaction between a station and an access point. When an access point or a station needs to send data, the following method steps are performed. As shown in FIG. 2, FIG. 2 is a flowchart of a data sending method according to this embodiment. Specifically, FIG. 2 is a processing process of generating an LTF and a process of sending the LTF by a transmit end. The transmit end may be specifically a station or an access point. The method includes the following content:

Step 101: Perform Fourier transform on a first time domain sequence to obtain a first frequency domain sequence, where the first time domain sequence is a sequence with an autocorrelation property.
Step 102: Determine, according to a maximum multipath delay of a system transmission channel, bandwidth of the channel, and a subcarrier quantity $N_{FFT}$, a maximum quantity of spatial flows that can be supported by a single symbol.
Step 103: Determine, in a parameter configuration table according to a total quantity of spatial flows, a cyclic shift parameter corresponding to each spatial flow, where the cyclic shift parameter represents a time sequence shift value of the first time domain sequence.
Step 104: Obtain an LTF according to the first frequency domain sequence, the maximum quantity of spatial flows, and the cyclic shift parameter.
Step 105: Send the LTF and indication information to each receive end, where the indication information includes a number of a spatial flow allocated to each receive end.

In step 101 in this embodiment of this application, the first time domain sequence is a sequence with an autocorrelation property. For example, the first time domain sequence may be a Zadoff-Chu sequence, a Frank sequence, a Golomb multiphase sequence, or a Chirp sequence. Optionally, the first time domain sequence is a sequence with an ideal autocorrelation property, for example, a Zadoff-Chu sequence.

However, a length N of the first time domain sequence is specifically determined by a quantity of consecutive available subcarriers of the channel. Preferably, a value of N is the quantity of consecutive available subcarriers.

For example, a channel includes 256 subcarriers. It is assumed that subcarrier numbers are {-128,-127,···-123,-122,···-2,-101,2,···122,123,···127}, where numbers of available subcarriers are {-120,···-1} and {1,···120}, and the rest are empty subcarriers. It may be seen that a quantity of consecutive available subcarriers is 120, and therefore, a value of N may be 120.

In another possible implementation manner, the length N may also be determined by a quantity of subcarriers included in a resource block (English: Resource Block, RB for short). A value of N is the quantity of subcarriers included in an RB.

For example, a channel includes 256 subcarriers. It is assumed that subcarrier numbers are {-128,-127,···-123,-122,···-2,-1,0,1,2,···122,123,···127}, where numbers of available subcarriers are {-120,···-1} and {1,···120}, and the rest are empty subcarriers. Each RB includes 24 subcarriers in a frequency domain. There are 10 RBs in total. Therefore, a value of N may be 24.

For ease of description, the first time domain sequence is denoted as $\{x_n\}, n = 0,···,N\text{-}1$. Then, step 101 is performed: perform Fourier transform on a first time domain sequence to obtain a first frequency domain sequence. The Fourier transform may be specifically, for example, fast Fourier transform (English: Fast Fourier Transform, FFT for short). After the Fourier transform is performed on the first time domain sequence, a length of an obtained frequency domain sequence is also N. Then, the obtained frequency domain sequence is used for bit complement according to locations of consecutive available subcarriers, and a location of an empty subcarrier is complemented with a bit to obtain the first frequency domain sequence. Therefore, the length of the first frequency domain sequence is the subcarrier quantity $N_{FFT}$ of the channel. Next, a specific implementation manner of step 102 is described: determine, according to a maximum multipath delay of a channel, bandwidth of the channel, and a subcarrier quantity $N_{FFT}$, a maximum quantity of spatial flows that can be supported by a single symbol. The maximum quantity of spatial flows that can be supported by a single symbol indicates MIMO channel estimation, of a maximum quantity of multiplexed spatial flows, supported by a single symbol. In a possible implementation manner, step 102 includes: dividing the subcarrier quantity $N_{FFT}$ by the bandwidth to obtain an inverse discrete Fourier transform (English: Inverse Discrete Fourier Transform, IDFT for short) period of an OFDM symbol; and dividing the IDFT period by the maximum multipath delay to obtain the maximum quantity of spatial flows that can be supported by a single symbol.

There may also be specifically multiple manners of obtaining the maximum multipath delay of the channel. In a first manner, a type of the system transmission channel, for example, an outdoor channel or an indoor channel, is determined according to a current operation mode of a system, for example, an indoor or outdoor operation mode; and according to a determined channel type, a delay of a channel model corresponding to the channel type is obtained and used as the maximum multipath delay.

In a second manner, the maximum multipath delay may be determined according to a cyclic prefix (English: Cyclic Prefix, CP for short) of a data frame. For example, a length of the CP is directly used as the maximum multipath delay.

It should be noted that step 101 and step 102 are not sequential, and may be simultaneously performed.

Further, a quantity of required symbols, that is, a symbol quantity, may be determined according to the total quantity of spatial flows and the maximum quantity of spatial flows supported by a single symbol. For example, the maximum quantity of spatial flows supported by a single symbol is 4, and the total quantity of spatial flows is 8. Therefore, the total quantity of required symbols is 2.

Next, an implementation manner of step 103 is described. First, the parameter configuration table is described. The parameter configuration table may be specifically configured in a system or agreed on in a protocol. A same parameter configuration table is used on a transmit end and a receive end. The parameter configuration table may include the following items: a total quantity of spatial flows, a number of a spatial flow, and a cyclic shift parameter. Further, the parameter configuration table further includes an orthogonal mapping matrix. Further, the parameter configuration table may further include a symbol quantity. In other words, the parameter configuration table includes a correspondence between the cyclic shift parameter and each spatial flow within the total quantity of spatial flows. Further, the parameter configuration table further includes a correspondence between the orthogonal mapping matrix and each spatial flow within the total quantity of spatial flows. Further, the parameter configuration table further includes a correspondence between the total quantity of spatial flows and the symbol quantity. Specifically, as shown in Table 1, Table 1 is a parameter configuration table of an example in which a total quantity $N_{ss}$ of spatial flows is 1 to 8 and a maximum quantity of spatial flows supported by a single symbol is 4, where M indicates a symbol quantity, $i_{ss}$ indicates a number of a spatial flow, $v_{i_{ss}}$ indicates a cyclic shift parameter, $P_{i_{ss}}(m)$ indicates an orthogonal mapping matrix, and a value of m is 0 to M-1.

**Table 1**

| $N_{ss}$ | $M$ | $i_{ss}$ | $v_{i_{ss}}$ | $P_{i_{ss}}(0)$ | $P_{i_{ss}}(1)$ |
|---|---|---|---|---|---|
| 1 | 1 | 0 | 0 | 1 | / |
| 2 | 1 | 0 | 0 | 1 | / |
|  | 1 | 1 | 2 | 1 | / |
| 3 | 1 | 0 | 0 | 1 | / |
|  | 1 | 1 | 1 | 1 | / |
|  | 1 | 2 | 2 | 1 | / |
| 4 | 1 | 0 | 0 | 1 | / |
|  | 1 | 1 | 1 | 1 | / |
|  | 1 | 2 | 2 | 1 | / |
|  | 1 | 3 | 3 | 1 | / |
| 5 | 2 | 0 | 0 | 1 | -1 |
|  | 2 | 1 | 1 | 1 | -1 |
|  | 2 | 2 | 2 | 1 | -1 |
|  | 2 | 3 | 3 | 1 | -1 |
|  | 2 | 4 | 0 | 1 | 1 |
| 6 | 2 | 0 | 0 | 1 | -1 |
|  | 2 | 1 | 1 | 1 | -1 |

(continued)

| $N_{ss}$ | $M$ | $i_{ss}$ | $v_{i_{ss}}$ | $P_{i_{ss}}(0)$ | $P_{i_{ss}}(1)$ |
|---|---|---|---|---|---|
| | 2 | 2 | 2 | 1 | -1 |
| | 2 | 3 | 3 | 1 | -1 |
| | 2 | 4 | 0 | 1 | 1 |
| | 2 | 5 | 1 | 1 | 1 |
| 7 | 2 | 0 | 0 | 1 | -1 |
| | 2 | 1 | 1 | 1 | -1 |
| | 2 | 2 | 2 | 1 | -1 |
| | 2 | 3 | 3 | 1 | -1 |
| | 2 | 4 | 0 | 1 | 1 |
| | 2 | 5 | 1 | 1 | 1 |
| | 2 | 6 | 2 | 1 | 1 |
| 8 | 2 | 0 | 0 | 1 | -1 |
| | 2 | 1 | 1 | 1 | -1 |
| | 2 | 2 | 2 | 1 | -1 |
| | 2 | 3 | 3 | 1 | -1 |
| | 2 | 4 | 0 | 1 | 1 |
| | 2 | 5 | 1 | 1 | 1 |
| | 2 | 6 | 2 | 1 | 1 |
| | 2 | 7 | 3 | 1 | 1 |

In actual application, the cyclic shift parameter $v_{i_{ss}}$ may be differently set. In Table 1, it is assumed that a first time domain sequence is divided into four segments. When the total quantity of spatial flows is 1, the number of the spatial flow is 0. In this case, the number of the spatial flow can be uniquely determined without performing shift. Therefore, in this case, the cyclic shift parameter is 0, that is, shift is not performed. When the total quantity of spatial flows is 2, shift may either not be performed on a spatial flow 0, and therefore, the cyclic shift parameter is 0. For a spatial flow 1, because the spatial flow 1 needs to be distinguished from the spatial flow 0, shift needs to be performed on the first time domain sequence. Then, the spatial flow 1 may be represented by a sequence obtained after the first time domain sequence is shifted by two segments, that is, circularly shifted by a half of an IDFT period of a symbol. Therefore, the cyclic shift parameter is 2. By analogy, shift is performed until the total quantity of spatial flows is greater than 4. For example, it is assumed that the first time domain sequence is 1234. For a case in which the total quantity of spatial flows is 2, shift is not required for a spatial flow 0. Therefore, the cyclic shift parameter is 0, and a corresponding symbol carries 1234. For a spatial flow 1, the first time domain sequence is shifted by two segments. Therefore, the cyclic shift parameter is 2, and a corresponding symbol carries 3412.

Certainly, the first time domain sequence may also be divided into another quantity of segments. For example, when the total quantity of spatial flows is 3, the first time domain sequence may also be divided into three segments. Shift may either not be performed on a spatial flow 0, and therefore, the cyclic shift parameter is 0. For a spatial flow 1, because the spatial flow 1 needs to be distinguished from the spatial flow 0, shift needs to be performed on the first time domain sequence. Then, the spatial flow 1 may be represented by a sequence obtained after the first time domain sequence is circularly shifted by one segment, that is, circularly shifted by one third of an IDFT period of a symbol. Therefore, the cyclic shift parameter is 1. For a spatial flow 2, because the spatial flow 2 needs to be distinguished from the spatial flows 0 and 1, cyclic shift needs to be performed on the first time domain sequence. Then, the spatial flow 2 may be represented by a sequence obtained after the first time domain sequence is circularly shifted by two segments, that is, circularly shifted by two thirds of the IDFT period of a symbol. Therefore, the cyclic shift parameter is 2.

Therefore, in actual application, specific expression forms of the cyclic shift parameter may be different.

In Table 1, when the total quantity of spatial flows is greater than 4, because the first time domain sequence obtained after being shifted for the fourth time is the same as a case in which the first time domain sequence is not shifted, a spatial flow 0 and a spatial flow 4 cannot be distinguished. Therefore, the orthogonal mapping matrix is used to further distinguish between different spatial flows.

It should be noted that step 103 and the foregoing step 101 to step 102 are not sequential, and may be simultaneously performed.

After step 101 to step 103 are performed, step 104 is performed: obtain an LTF according to the first frequency sequence, the maximum quantity of spatial flows, and the cyclic shift parameter.

It should be noted that if Table 1 is used as an example, when the total quantity of spatial flows is less than or equal to 4, the orthogonal mapping matrix is not required for distinguishing between the spatial flows. However, when the total quantity of spatial flows is greater than 4, the orthogonal mapping matrix is required for further distinguishing between the spatial flows. Therefore, optionally, the method further includes: determining, in the parameter configuration table according to the total quantity of spatial flows, an orthogonal mapping matrix corresponding to each spatial flow. Step 104 specifically includes: obtaining the LTF according to the first frequency domain sequence, the maximum quantity of spatial flows, the cyclic shift parameter, and the orthogonal mapping matrix.

In this embodiment, for example, with reference to the orthogonal mapping matrix, step 104 specifically includes: obtaining a second frequency domain sequence of each spatial flow according to the first frequency domain sequence, the maximum quantity of spatial flows, the cyclic shift parameter, and the orthogonal mapping matrix; performing inverse Fourier transform on the second frequency domain sequence to obtain a second time domain sequence corresponding to each spatial flow; and adding up the second time domain sequences corresponding to all the spatial flows, to obtain the LTF. The second frequency domain sequence of each spatial flow includes frequency domain sequences of all symbols of each spatial flow. In other words, a quantity of obtained second frequency domain sequences is the same as a quantity of symbols included in a spatial flow. Correspondingly, a quantity of second time domain sequences is corresponding to a quantity of second frequency domain sequences.

When no reference needs to be made to the orthogonal mapping matrix, the orthogonal mapping matrix may be deleted from the foregoing steps.

Optionally, after the LTF is obtained in step 104, step 105 is performed: send the LTF and indication information to each receive end, where the indication information includes a number of a spatial flow allocated to each receive end. Further, the indication information further includes a symbol quantity of each receive end.

That the LTF is sent to each receive end may be specifically that the LTF is sent together with data of each spatial flow. The indication information may be specifically indicated by using an information bit in a downlink/an uplink resource indication field. For example, the symbol quantity is indicated by using 1 bit, a start number of a spatial flow allocated to each receive end is indicated by using 3 bits, and the total quantity of spatial flows allocated to each receive end is indicated by using 3 bits. For example, when the total quantity of spatial flows is 8, spatial flows allocated to the $u^{th}$ user are spatial flows 4 to 6. It can be learned by searching the parameter configuration table shown in Table 1 that when the total quantity of spatial flows is 8, the symbol quantity is 2. Therefore, a bit for the symbol quantity may be indicated by {1}, bits for a start number of a spatial flow may be indicated by {1,0,0}, and bits for a quantity of spatial flows allocated to the $u^{th}$ user may be indicated by {0,1,1}. Certainly, in actual application, the indication information may also be sent to each receive end in another manner.

Optionally, the transmit end sends the LTF and the indication information to each receive end, so that each receive end performs channel estimation.

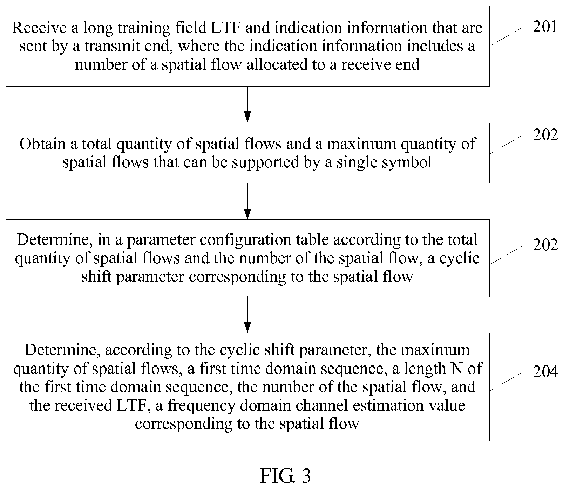

The following describes how to perform channel estimation on a receive end side. As shown in FIG. 3, FIG. 3 is a flowchart of a channel estimation method according to this embodiment. The method includes:

Step 201: Receive an LTF and indication information that are sent by a transmit end, where the indication information includes a symbol quantity of each receive end and a number of a corresponding spatial flow allocated to each receive end.

Step 202: Obtain a total quantity of spatial flows and a maximum quantity of spatial flows that can be supported by a single symbol.

Step 203: Determine, in a parameter configuration table according to the total quantity of spatial flows and the number of the spatial flow, a cyclic shift parameter corresponding to the spatial flow, where the cyclic shift parameter represents a time sequence shift value of a first time domain sequence, and the first time domain sequence is a sequence with an autocorrelation property.

Step 204: Determine, according to the cyclic shift parameter, the maximum quantity of spatial flows, the first time domain sequence, a length N of the first time domain sequence, the number of the spatial flow, and the received LTF, a frequency domain channel estimation value corresponding to the spatial flow.

That the transmit end further sends the indication information to each receive end is described in the foregoing. Correspondingly, the receive end performs step 201: receive an LTF and indication information. The symbol quantity and the number of the spatial flow corresponding to each receive end may be obtained according to bit information in an indication bit of the indication information.

A possible implementation manner of step 202 is the same as a specific manner of the foregoing step 102. Therefore, details are not described herein.

In another possible implementation manner, step 202 is specifically: receiving the total quantity of spatial flows sent by the transmit end and the maximum quantity of spatial flows that can be supported by a single symbol.

In step 203, the first time domain sequence is the same as the sequence used in step 101. Generally, which sequence the first time domain sequence is specifically is configured in a system. Therefore, the transmit end and the receive end use a same first time domain sequence by default. Alternatively, that both the transmit end and the receive end use a same first time domain sequence that is agreed on in a protocol.

The length of the first time domain sequence is N. Optionally, a quantity of consecutive available subcarriers of the channel or a quantity of subcarriers included in a resource block is the length N. Generally, both the transmit end and the receive end agree on, by default, that the length N of the first time domain sequence is the quantity of consecutive available subcarriers of the channel or the quantity of subcarriers included in a resource block. Therefore, both the transmit end and the receive end determines the length N according to this rule.

Next, step 203 is performed: determine, in a parameter configuration table according to the total quantity of spatial flows and a number of the spatial flow, a cyclic shift parameter corresponding to the spatial flow.

The parameter configuration table is the same as a parameter configuration table used by the transmit end. A concept of the cyclic shift parameter is the same as that described above.

Next, step 204 is performed.

Optionally, the method further includes: determining, in the parameter configuration table according to the total quantity of spatial flows and the number of the spatial flow, an orthogonal mapping matrix corresponding to the spatial flow. A concept of the orthogonal mapping matrix is the same as that described above.

Therefore, step 204 specifically includes: determining, according to the cyclic shift parameter, the maximum quantity of spatial flows, the first time domain sequence, the length N of the first time domain sequence, the number of the spatial flow, the orthogonal mapping matrix, and the received LTF, the frequency domain channel estimation value corresponding to the spatial flow. Optionally, a possible implementation manner of step 204 is: determining a window function according to the cyclic shift parameter, the maximum quantity of spatial flows, and the length N; merging the received LTF according to the number of the spatial flow and the orthogonal mapping matrix; obtaining a second estimated time domain sequence according to an LTF obtained after the merging; performing Fourier transform on the second estimated time domain sequence to obtain a first estimated frequency domain sequence; extracting, from the first estimated frequency domain sequence, at least one second estimated frequency domain sequence corresponding to locations and a quantity that are of consecutive available subcarriers and corresponding to the receive end; perform inverse Fourier transform on the at least one second estimated frequency domain sequence to obtain at least one third estimated time domain sequence; processing the at least one third estimated time domain sequence and the first time domain sequence by using the window function, to obtain at least one fourth estimated time domain sequence; and separately performing Fourier transform on the at least one fourth estimated time domain sequence to obtain the frequency domain channel estimation value corresponding to the spatial flow.

The window function may have multiple forms, for example, a rectangular window, a triangular window, Hanning window, Hamming window, and Gaussian window.

It should be noted that a process of performing windowing processing by using the window function and performing merging processing on the received LTF may be described as the foregoing. Merging processing is performed before windowing processing; or windowing processing may be performed before merging processing.

It may be seen from the foregoing description that according to this embodiment of the present application, a sequence with an autocorrelation property is used as a sequence used for an LTF, and then LTFs used by spatial flows in a multi-spatial-flow scenario are distinguished by using different cyclic shift parameters, so that channel estimation can be implemented with less symbols sent in each spatial flow than those in the prior art, so as to reduce system overheads. The following separately uses several specific examples to describe specific implementation processes of the data sending method and the channel estimation method in this embodiment. Example 1: The system is in an outdoor operation mode, the channel is an outdoor channel and applied in downlink transmission. It is assumed that a bandwidth $BW = 20MHz$, a subcarrier quantity is $N_{FFT} = 256$, and subcarrier numbers are {-128,-127,···-123,-122,···-2,-1,0,1,2,···122,123,···127}, where numbers of available subcarriers are {-120···-1} and {1,···120}, and the rest are empty subcarriers.

It is assumed that $N_{ss}$ is a total quantity of transmitted spatial flows, a total of $N_u$ users share the entire bandwidth, and $N_{ss,u}$ is a quantity of spatial flows transmitted to the $u^{th}$ user, where $u = 0,1,···N_u-1$. It is assumed that a transmit end is an AP.

A first time domain sequence with an ideal autocorrelation property is obtained. A length of the first time domain sequence is that $N = 120$. The first time domain sequence may be indicated by $\{x_n\}, n = 0,···,N-1$.

N-point Fourier transform is performed on the first time domain sequence, and an obtained frequency domain sequence is indicated by $\{X_d\} = FFT[xn], d = 0,\cdots,N\text{-}1$. Therefore, a first frequency domain sequence $\{L_k\}, k = -\dfrac{N_{FFT}}{2},\cdots\dfrac{N_{FFT}}{2} - 1$ may be indicated by $\{0,0,0,0,0,0,0,0,X_0,\cdots X_{119},0,X_0,\cdots X_{119},0,0,0,0,0,0,0\}$. That is, a length of the first frequency domain sequence is the subcarrier quantity, 256 in this embodiment.

In this embodiment, the channel is an outdoor channel, and a maximum multipath delay $\tau_{max} = 3.2us$ of the channel is obtained by using an outdoor channel model. An IDFT period $T_{IDFT} = \dfrac{N_{FFT}}{BW} = 12.8us$ of a symbol may be obtained according to the bandwidth $BW = 20MHz$ and the subcarrier quantity $N_{FFT} = 256$. A single symbol can support MIMO channel estimation of a maximum of $i_{ss\_max} = \dfrac{T_{IDFT}}{\tau_{max}} = 4$ multiplexed spatial flows.

Optionally, a quantity $M = \lceil N_{ss}/i_{ss\_max}\rceil$ of symbols that need to be sent may be further calculated, where $\lceil\ \rceil$ is a roundup function.

In the parameter configuration table shown in Table 1, a cyclic shift parameter $v_{iss}$ and an orthogonal mapping matrix $P_{iss}(m)$ that are corresponding to each spatial flow are determined according to the total quantity $N_{ss}$ of spatial flows of the channel, where $v_{iss}$ indicates the cyclic shift parameter of the $i_{ss}$th spatial flow, and $P_{iss}(m)$ indicates the orthogonal mapping matrix of the $i_{ss}$th spatial flow.

A second frequency domain sequence of each spatial flow is obtained according to the first frequency domain sequence $\{L_k\}$, the maximum quantity $i_{ss\_max}$ of spatial flows, the cyclic shift parameter $v_{iss}$, and the orthogonal mapping matrix $P_{iss}(m)$.

The second frequency domain sequence $L_{k,m}^{i_{ss}}$ corresponding to the $i_{ss}$th spatial flow may be indicated by

$$L_{k,m}^{i_{ss}} = L_k \exp\left( j2\pi \frac{v_{i_{ss}}}{i_{ss\_max}} k \right) P_{i_{ss}}(m), \qquad m=0,1,...M\text{-}1, \qquad\qquad \text{where}$$

$$i_{ss} = \begin{cases} l & u = 0, \quad l = 0,1,\cdots N_{ss,0} - 1 \\ \displaystyle\sum_{u'=0}^{u-1} N_{ss,u'} + l & u = 1,\cdots N_u - 1, \quad l = 0,1,\cdots N_{ss,u} - 1 \end{cases} .$$

Then, inverse Fourier transform is performed on the second frequency domain sequence to obtain a second time domain sequence corresponding to each spatial flow. For example, inverse Fourier transform is performed on the second frequency domain sequence $L_{k,m}^{i_{ss}}$ corresponding to the $i_{ss}$th spatial flow, to obtain the second time domain sequence $ltf_{n,m}^{i_{ss}} = IDFT\left[ L_{k,m}^{i_{ss}} \right], n = 0,1,\cdots N_{FFT} - 1$ corresponding to the $i_{ss}$th spatial flow. Finally, the second time domain sequences corresponding to all the spatial flows are added up, to obtain the LTF.

For example, the LTF actually sent by the AP may be indicated by $ltf_{n,m} = \displaystyle\sum_{i_{ss}=0}^{N_{ss}-1} ltf_{n,m}^{i_{ss}}$ where $ltf_{n,m}$ indicates the LTF.

Correspondingly, the following uses the $u$th user as an example to describe a process of implementing channel estimation by a receive end. The receive end is, for example, a station.

A maximum quantity of spatial flows, for example, the maximum quantity of spatial flows received from the transmit end, is obtained.

The first time domain sequence is obtained, where a length of the first time domain sequence is N. In this embodiment, the length N is specifically a quantity of consecutive available subcarriers, that is, 120. The first time domain sequence is still indicated by $\{x_n\}$.

The LTF and the indication information are received, where the indication information includes a symbol quantity M of each receive end and a spatial flow $i_{ss}$ allocated to each receive end. Further, for example, the symbol quantity M is determined as 2 according to bit information in a downlink resource indication field, and the spatial flows $i_{ss}$ allocated to the $u^{th}$ user are spatial flows 4 to 6.

In the parameter configuration table shown in Table 1, the cyclic shift parameter $v_{i_{ss}}$ and the orthogonal mapping matrix $P_{i_{ss}}(m)$ that are corresponding to the spatial flow $i_{ss}$ are determined according to the total quantity of spatial flows and the number of the spatial flow.

The frequency domain channel estimation value corresponding to the spatial flow is determined according to the cyclic shift parameter, the maximum quantity of spatial flows, the first time domain sequence, the length N of the first time domain sequence, the orthogonal mapping matrix, and the received LTF.

Specifically, a possible implementation manner of obtaining the frequency domain channel estimation value corresponding to the spatial flow is: determining a window function according to the cyclic shift parameter $v_{i_{ss}}$, the maximum quantity $i_{ss\_max}$ of spatial flows, and the length N. In this embodiment, for example, a rectangular window function $w_t$ is determined, and the window function is as follows:

$$w_t^{i_{ss}} = \begin{cases} 1 & \dfrac{v_{i_{ss}} N}{i_{ss\_max}} \le t < \dfrac{\left(v_{i_{ss}} + 1\right) N}{i_{ss\_max}} \\ 0 & 0 \le t < \dfrac{v_{i_{ss}} N}{i_{ss\_max}}, \dfrac{\left(v_{i_{ss}} + 1\right) N}{i_{ss\_max}} \le t < N \end{cases}.$$

The foregoing example is still used. For the $u^{th}$ user, values of $i_{ss}$ are 4, 5, and 6.

The received LTF $\{y_m\}$ is merged according to the number $i_{ss}$ of the spatial flow and the orthogonal mapping matrix $P_{i_{ss}}(m)$ of the $u^{th}$ user. An LTF obtained after the merging is $y^{i_{ss}} = \displaystyle\sum_{m=0}^{M-1} y_m P_{i_{ss}}(m)$.

CP removal processing is performed on the LTF $y^{iss}$ obtained after the merging, to obtain a second estimated time domain sequence.

Then, $N_{FFT}$-point Fourier transform is performed on the second estimated time domain sequence to obtain a first estimated frequency domain sequence $Y^{iss}$, where $Y^{iss} = DFT[y^{iss}]$.

Next, at least one second estimated frequency domain sequence corresponding to locations and a quantity that are of consecutive available subcarriers and corresponding to the receive end is extracted from the first estimated frequency domain sequence $Y^{iss}$. The foregoing example is still used. It is assumed that the $u^{th}$ user uses both consecutive available subcarriers $\{-120,\cdots-1\}$ and $\{1,\cdots120\}$. Then, two second estimated frequency domain sequences $\left\{ Y_{k_1}^{i_{ss}} \right\}, k_1 = -120, \cdots -1$ and $\left\{ Y_{k_2}^{i_{ss}} \right\}, k_2 = 1, \cdots 120$ may be extracted from the first estimated frequency domain sequence $Y^{iss}$. If the $u^{th}$ user uses only consecutive available subcarriers $\{-120,\cdots-1\}$, only a second estimated frequency domain sequence $\left\{ Y_{k_1}^{i_{ss}} \right\}, k_1 = -120, \cdots -1$ is extracted.

Next, N-point inverse Fourier transform is performed on the at least one second estimated frequency domain sequence to obtain at least one third estimated time domain sequence. The foregoing two second estimated frequency domain sequences $\left\{ Y_{k_1}^{i_{ss}} \right\}, k_1 = -120, \cdots -1$ and $\left\{ Y_{k_2}^{i_{ss}} \right\}, k_2 = 1, \cdots 120$ are still used as an example. After N-point inverse Fourier transform is separately performed, two third estimated time domain sequences

$$y_{n_1}^{i_{ss}} = IDFT\left[ Y_{k_1}^{i_{ss}} \right], n_1 = 0, 1, \cdots N-1 \text{ and } y_{n_2}^{i_{ss}} = IDFT\left[ Y_{k_2}^{i_{ss}} \right], n_2 = 0, 1, \cdots N-1$$

are obtained. It should be noted that the second estimated frequency domain sequence and the third estimated time domain sequence are in a one-to-one correspondence.

Then, the at least one third estimated time domain sequence and the first time domain sequence are processed by using the foregoing determined window function, to obtain at least one fourth estimated time domain sequence.

Specifically, two fourth estimated time domain sequences may be indicated by $h_{t_1}^{i_{ss}} = w_{t_1}^{i_{ss}} \sum\limits_{n_1=0}^{N-1} y_{n_1}^{i_{ss}} x_{n_1-t_1}$ and

$$h_{t_2}^{i_{ss}} = w_{t_2}^{i_{ss}} \sum\limits_{n_2=0}^{N-1} y_{n_2}^{i_{ss}} x_{n_2-t_2}$$ where left sides of the equations separately indicate two fourth estimated time domain sequences, and right sides of the equations indicate operational formulas. A cross-correlation operation is performed on the third estimated time domain sequence and the first time domain sequence, and then, a windowing operation is performed by using the window function.

Next, N-point Fourier transform is separately performed on the at least one fourth estimated time domain sequence to obtain the frequency domain channel estimation value corresponding to the spatial flow. Specifically, N-point Fourier transform is performed on $\left\{ h_{t_1}^{i_{ss}} \right\}$ and $\left\{ h_{t_2}^{i_{ss}} \right\}$, which may be indicated by formulas

$$H_{s_1}^{i_{ss}} = DFT\left[ h_{t_1}^{i_{ss}} \right], s_1 = 0, 1, \cdots N-1$$ and

$$H_{s_2}^{i_{ss}} = DFT\left[ h_{t_2}^{i_{ss}} \right], s_2 = 0, 1, \cdots N-1$$ Therefore, the frequency domain channel estimation values corresponding to the spatial flows of the $u^{th}$ user may be indicated by

$$\left\{ 0,0,0,0,0,0,0,0, H_{s_1=0}^{i_{ss}}, \cdots H_{s_1=119}^{i_{ss}}, 0, H_{s_2=0}^{i_{ss}}, \cdots H_{s_2=119}^{i_{ss}}, 0,0,0,0,0,0,0 \right\}.$$

Example 2: In this embodiment, the system is in an indoor operation mode, the channel is an indoor channel, and a maximum multipath delay of the channel is determined as $\tau_{max} = 0.8us$ by using an indoor channel model, which is different from example 1. Therefore, a maximum number of spatial flows supported by a single HTF symbol is

$$i_{ss\_max} = \frac{T_{IDFT}}{\tau_{max}} = 16$$ A quantity M of symbols that need to be sent by the transmit end is 1. In addition, in this case, settings of the parameter configuration table may be shown as Table 2.

**Table 2**

| $N_{ss}$ | $M$ | $i_{ss}$ | $v_{iss}$ | $P_{i_{ss}}(0)$ | $P_{i_{ss}}(1)$ |
|---|---|---|---|---|---|
| 1 | 1 | 0 | 0 | 1 | / |
| 2 | 1 | 0 | 0 | 1 | / |
|   | 1 | 1 | 8 | 1 | / |
| 3 | 1 | 0 | 0 | 1 | / |
|   | 1 | 1 | 4 | 1 | / |
|   | 1 | 2 | 8 | 1 | / |
| 4 | 1 | 0 | 0 | 1 | / |
|   | 1 | 1 | 4 | 1 | / |
|   | 1 | 2 | 8 | 1 | / |
|   | 1 | 3 | 12 | 1 | / |
| 5 | 1 | 0 | 0 | 1 | / |
|   | 1 | 1 | 2 | 1 | / |
|   | 1 | 2 | 4 | 1 | / |

(continued)

| $N_{ss}$ | $M$ | $i_{ss}$ | $v_{i_{ss}}$ | $P_{i_{ss}}(0)$ | $P_{i_{ss}}(1)$ |
|---|---|---|---|---|---|
| | 1 | 3 | 6 | 1 | / |
| | 1 | 4 | 8 | 1 | / |
| 6 | 1 | 0 | 0 | 1 | / |
| | 1 | 1 | 2 | 1 | / |
| | 1 | 2 | 4 | 1 | / |
| | 1 | 3 | 6 | 1 | / |
| | 1 | 4 | 8 | 1 | / |
| | 1 | 5 | 10 | 1 | / |
| 7 | 1 | 0 | 0 | 1 | / |
| | 1 | 1 | 2 | 1 | / |
| | 1 | 2 | 4 | 1 | / |
| | 1 | 3 | 6 | 1 | / |
| | 1 | 4 | 8 | 1 | / |
| | 1 | 5 | 10 | 1 | / |
| | 1 | 6 | 12 | 1 | / |
| 8 | 1 | 0 | 0 | 1 | / |
| | 1 | 1 | 2 | 1 | / |
| | 1 | 2 | 4 | 1 | / |
| | 1 | 3 | 6 | 1 | / |
| | 1 | 4 | 8 | 1 | / |
| | 1 | 5 | 10 | 1 | / |
| | 1 | 6 | 12 | 1 | / |
| | 1 | 7 | 14 | 1 | / |

In this embodiment, specific steps are the same as those in example 1, except that the foregoing parameters and the parameter configuration table are different from those in example 1.

For the channel estimation process of the receive end in this embodiment, specific steps are the same as those in the foregoing example 1, except that the foregoing parameters and the parameter configuration table are different from those in example 1. Therefore, details are not described herein.

Example 3: In this embodiment, a subcarrier quantity is $N_{FFT}$ = 512, which is different from example 1. It is assumed that subcarrier numbers are {-256,-255,···226,-225,···-2,-1,0,1,2,···225,226,···255}, where numbers of available subcarriers are {-225,···-2} and {2,···225}, and the rest are empty subcarriers.

Therefore, in this case, the length N is 224. A first frequency domain sequence

$$\{L_k\}, k = -\frac{N_{FFT}}{2}, \cdots \frac{N_{FFT}}{2} - 1 \quad \text{may be indicated by} \quad \left\{ \underbrace{0, \cdots, 0}_{31}, X_0, \cdots X_{223}, 0, 0, 0, X_0, \cdots X_{223}, \underbrace{0, \cdots, 0}_{30} \right\}.$$

An IDFT period of an OFDM symbol is $T_{IDFT} = \frac{N_{FFT}}{BW} = 25.6us$. A maximum quantity of spatial flows supported by a single symbol is $i_{ss\_max} = \frac{T_{IDFT}}{\tau_{max}} = 8$. A quantity M of symbols that need to be sent by the transmit end is 1.

In this embodiment, settings of the parameter configuration table may be shown as Table 3.

**Table 3**

| $N_{ss}$ | $M$ | $i_{ss}$ | $v_{i_{ss}}$ | $P_{i_{ss}}(0)$ | $P_{i_{ss}}(1)$ |
|---|---|---|---|---|---|
| 1 | 1 | 0 | 0 | 1 | / |
| 2 | 1 | 0 | 0 | 1 | / |
|   | 1 | 1 | 4 | 1 | / |
| 3 | 1 | 0 | 0 | 1 | / |
|   | 1 | 1 | 2 | 1 | / |
|   | 1 | 2 | 4 | 1 | / |
| 4 | 1 | 0 | 0 | 1 | / |
|   | 1 | 1 | 2 | 1 | / |
|   | 1 | 2 | 4 | 1 | / |
|   | 1 | 3 | 6 | 1 | / |
| 5 | 1 | 0 | 0 | 1 | / |
|   | 1 | 1 | 1 | 1 | / |
|   | 1 | 2 | 2 | 1 | / |
|   | 1 | 3 | 3 | 1 | / |
|   | 1 | 4 | 4 | 1 | / |
| 6 | 1 | 0 | 0 | 1 | / |
|   | 1 | 1 | 1 | 1 | / |
|   | 1 | 2 | 2 | 1 | / |
|   | 1 | 3 | 3 | 1 | / |
|   | 1 | 4 | 4 | 1 | / |
|   | 1 | 5 | 5 | 1 | / |
| 7 | 1 | 0 | 0 | 1 | / |
|   | 1 | 1 | 1 | 1 | / |
|   | 1 | 2 | 2 | 1 | / |
|   | 1 | 3 | 3 | 1 | / |
|   | 1 | 4 | 4 | 1 | / |
|   | 1 | 5 | 5 | 1 | / |
|   | 1 | 6 | 6 | 1 | / |
| 8 | 1 | 0 | 0 | 1 | / |
|   | 1 | 1 | 1 | 1 | / |
|   | 1 | 2 | 2 | 1 | / |
|   | 1 | 3 | 3 | 1 | / |
|   | 1 | 4 | 4 | 1 | / |
|   | 1 | 5 | 5 | 1 | / |
|   | 1 | 6 | 6 | 1 | / |
|   | 1 | 7 | 7 | 1 | / |

In this embodiment, specific steps are the same as those in example 1, except that the foregoing parameters and the parameter configuration table are different from those in example 1.

For the channel estimation process of the receive end in this embodiment, specific steps are the same as those in the foregoing example 1, except that the foregoing parameters and the parameter configuration table are different from those in example 1. Therefore, details are not described herein.

Example 4: In this embodiment, the transmit end is, for example, a station and is applied in uplink transmission, and the receive end is, for example, an AP, which is different from example 1. In this embodiment, uplink data transmission is scheduled by the AP. The AP first sends a next or next several uplink resource indications to the station. It is assumed that in the uplink resource indication, a total of $N_u$ users are set to share the entire bandwidth during this time of uplink transmission, where $N_{ss}$ is a total quantity of transmitted spatial flows, and $N_{ss,u}$ is a quantity of spatial flows transmitted by the $u^{th}$ user, and $u = 0,1,\cdots N_u\text{-}1$. Other steps are the same as those in the foregoing example 1.

For a process of performing channel estimation by the receive end, in step 203 in this embodiment, a symbol quantity M and a spatial flow corresponding to the receive end are determined according to indication information, which is different from example 1. The spatial flow corresponding to the receive end is specifically a spatial flow separately transmitted by the $N_u$ users. The indication information is specifically obtained from the uplink resource indication sent by the AP. Other steps are the same as those in the foregoing example 1. Example 5: In this embodiment, an orthogonal frequency division multiple access (English: Orthogonal Frequency Division Multiple Access, OFDMA for short) transmission method is used, which is different from example 1. Each RB includes 24 subcarriers in a frequency domain.

There are 10 RBs in total that are separately {-120,⋯,-97}, {-96,⋯,-73}, ⋯, {73,⋯,96}, and {97,⋯,120}.

It is assumed that $N_{ss}^{r}$ is a total quantity of spatial flows transmitted on bandwidth of the $r^{th}$ RB, where $r = 0,1,\cdots 9$. A total of $N_u^{r}$ users share this RB. $N_{ss,u}^{r}$ is a quantity of spatial flows transmitted to the $u^{th}$ user on the bandwidth of the $r^{th}$ RB, where $u = 0,1,\cdots N_u^{r} - 1$. Therefore, in this case, the length N of the first time domain sequence is a quantity of subcarriers included in an RB, that is 24. A first frequency domain sequence

$$\left\{L_k^r\right\}, k = -\frac{N_{FFT}}{2}, \cdots \frac{N_{FFT}}{2} - 1 \qquad \text{of} \qquad \text{the} \qquad r^{th} \qquad \text{RB} \qquad \text{may} \qquad \text{be} \qquad \text{indicated} \qquad \text{by}$$

$$\begin{cases} \left\{\underbrace{0,\cdots,0}_{8+r\times24}, X_0, \cdots X_{23}, \underbrace{0,\cdots 0}_{1+(9-r)\times24+7}\right\}, 0 \le r < 5 \\ \\ \left\{\underbrace{0,\cdots,0}_{8+r\times24+1}, X_0, \cdots X_{23}, \underbrace{0,\cdots 0}_{(9-r)\times24+7}\right\}, 5 \le r < 10 \end{cases}.$$

A quantity of symbols that need to be sent is $M = \left\lceil N_{ss}/i_{ss\_max} \right\rceil$, $N_{ss} = \max_{r}\left\{N_{ss}^{r}\right\}$ where $\lceil \ \rceil$ is a roundup function. In other words, in this embodiment, a total quantity $N_{ss}$ of spatial flows is a maximum value of the total quantity $N_{ss}^{r}$ of spatial flows transmitted in each RB.

In a parameter configuration table shown in Table 4, a cyclic shift parameter $v_{i_{ss}}^{r}$ and an orthogonal mapping matrix $P_{i_{ss}}^{r}(m)$ that are corresponding to each spatial flow of each RB are determined according to the total quantity $N_{ss}$ of spatial flows of a channel, the total quantity $N_{ss}^{r}$ of spatial flows in the $r^{th}$ RB, and a number of a spatial flow, where $i_{ss}^{r}$ indicates a cyclic shift parameter of the $i_{ss}^{th}$ spatial flow in the $r^{th}$ RB, and $P_{i_{ss}}^{r}(m)$ indicates an orthogonal mapping matrix of the $i_{ss}^{th}$ spatial flow in the $r^{th}$ RB.

**Table 4**

| $N_{ss}$ | $N_{ss}^r$ | $M$ | $i_{ss}^r$ | $v_{i_{ss}}^r$ | $P_{i_{ss}}^r(0)$ | $P_{i_{ss}}^r(1)$ |
|---|---|---|---|---|---|---|
| 1 | 1 | 1 | 0 | 0 | 1 | / |
| 2 | 1 | 1 | 0 | 0 | 1 | / |
| □ | 2 | 1 | 0 | 0 | 1 | / |
| □ | □ | 1 | 1 | 2 | 1 | / |
| 3 | 1 | 1 | 0 | 0 | 1 | / |
| □ | 2 | 1 | 0 | 0 | 1 | / |
| □ | □ | 1 | 1 | 2 | 1 | / |
| □ | 3 | 1 | 0 | 0 | 1 | / |
| □ | □ | 1 | 1 | 1 | 1 | / |
| □ | □ | 1 | 2 | 2 | 1 | / |
| 4 | 1 | 1 | 0 | 0 | 1 | / |
| □ | 2 | 1 | 0 | 0 | 1 | / |
| □ | □ | 1 | 1 | 2 | 1 | / |
| □ | 3 | 1 | 0 | 0 | 1 | / |
| □ | □ | 1 | 1 | 1 | 1 | / |
| □ | □ | 1 | 2 | 2 | 1 | / |
| □ | 4 | 1 | 0 | 0 | 1 | / |
| □ | □ | 1 | 1 | 1 | 1 | / |
| □ | □ | 1 | 2 | 2 | 1 | / |
| □ | □ | 1 | 3 | 3 | 1 | / |
| 5 | 1 | 2 | 0 | 0 | 1 | 1 |
| □ | 2 | 2 | 0 | 0 | 1 | 1 |
| □ | □ | 2 | 1 | 2 | 1 | 1 |
| □ | 3 | 2 | 0 | 0 | 1 | 1 |
| □ | □ | 2 | 1 | 1 | 1 | 1 |
| □ | □ | 2 | 2 | 2 | 1 | 1 |
| □ | 4 | 2 | 0 | 0 | 1 | 1 |
| □ | □ | 2 | 1 | 1 | 1 | 1 |
| □ | □ | 2 | 2 | 2 | 1 | 1 |
| □ | □ | 2 | 3 | 3 | 1 | 1 |
| □ | 5 | 2 | 0 | 0 | 1 | -1 |
| □ | □ | 2 | 1 | 1 | 1 | -1 |
| □ | □ | 2 | 2 | 2 | 1 | -1 |
| □ | □ | 2 | 3 | 3 | 1 | -1 |
| □ | □ | 2 | 4 | 0 | 1 | 1 |
| 6 | 1 | 2 | 0 | 0 | 1 | 1 |
| □ | 2 | 2 | 0 | 0 | 1 | 1 |

(continued)

| $N_{ss}$ | $N_{ss}^r$ | $M$ | $i_{ss}^r$ | $v_{i_{ss}}^r$ | $P_{i_{ss}}^r(0)$ | $P_{i_{ss}}^r(1)$ |
|---|---|---|---|---|---|---|
| ☐ | ☐ | 2 | 1 | 2 | 1 | 1 |
| ☐ | 3 | 2 | 0 | 0 | 1 | 1 |
| ☐ | ☐ | 2 | 1 | 1 | 1 | 1 |
| ☐ | ☐ | 2 | 2 | 2 | 1 | 1 |
| ☐ | 4 | 2 | 0 | 0 | 1 | 1 |
| ☐ | ☐ | 2 | 1 | 1 | 1 | 1 |
| ☐ | ☐ | 2 | 2 | 2 | 1 | 1 |
| ☐ | ☐ | 2 | 3 | 3 | 1 | 1 |
| ☐ | 5 | 2 | 0 | 0 | 1 | -1 |
| ☐ | ☐ | 2 | 1 | 1 | 1 | -1 |
| ☐ | ☐ | 2 | 2 | 2 | 1 | -1 |
| ☐ | ☐ | 2 | 3 | 3 | 1 | -1 |
| ☐ | ☐ | 2 | 4 | 0 | 1 | 1 |
| ☐ | 6 | 2 | 0 | 0 | 1 | -1 |
| ☐ | ☐ | 2 | 1 | 1 | 1 | -1 |
| ☐ | ☐ | 2 | 2 | 2 | 1 | -1 |
| ☐ | ☐ | 2 | 3 | 3 | 1 | -1 |
| ☐ | ☐ | 2 | 4 | 0 | 1 | 1 |
| ☐ | ☐ | 2 | 5 | 1 | 1 | 1 |
| 7 | 1 | 2 | 0 | 0 | 1 | 1 |
| ☐ | 2 | 2 | 0 | 0 | 1 | 1 |
| ☐ | ☐ | 2 | 1 | 2 | 1 | 1 |
| ☐ | 3 | 2 | 0 | 0 | 1 | 1 |
| ☐ | ☐ | 2 | 1 | 1 | 1 | 1 |
| ☐ | ☐ | 2 | 2 | 2 | 1 | 1 |
| ☐ | 4 | 2 | 0 | 0 | 1 | 1 |
| ☐ | ☐ | 2 | 1 | 1 | 1 | 1 |
| ☐ | ☐ | 2 | 2 | 2 | 1 | 1 |
| ☐ | ☐ | 2 | 3 | 3 | 1 | 1 |
| ☐ | 5 | 2 | 0 | 0 | 1 | -1 |
| ☐ | ☐ | 2 | 1 | 1 | 1 | -1 |
| ☐ | ☐ | 2 | 2 | 2 | 1 | -1 |
| ☐ | ☐ | 2 | 3 | 3 | 1 | -1 |
| ☐ | ☐ | 2 | 4 | 0 | 1 | 1 |
| ☐ | 6 | 2 | 0 | 0 | 1 | -1 |
| ☐ | ☐ | 2 | 1 | 1 | 1 | -1 |
| ☐ | ☐ | 2 | 2 | 2 | 1 | -1 |

(continued)

| $N_{ss}$ | $N_{ss}^r$ | $M$ | $i_{ss}^r$ | $v_{i_{ss}}^r$ | $P_{i_{ss}}^r(0)$ | $P_{i_{ss}}^r(1)$ |
|---|---|---|---|---|---|---|
| ☐ | ☐ | 2 | 3 | 3 | 1 | -1 |
| ☐ | ☐ | 2 | 4 | 0 | 1 | 1 |
| ☐ | ☐ | 2 | 5 | 1 | 1 | 1 |
| ☐ | 7 | 2 | 0 | 0 | 1 | -1 |
| ☐ | ☐ | 2 | 1 | 1 | 1 | -1 |
| ☐ | ☐ | 2 | 2 | 2 | 1 | -1 |
| ☐ | ☐ | 2 | 3 | 3 | 1 | -1 |
| ☐ | ☐ | 2 | 4 | 0 | 1 | 1 |
| ☐ | ☐ | 2 | 5 | 1 | 1 | 1 |
| ☐ | ☐ | 2 | 6 | 2 | 1 | 1 |
| 8 | 1 | 2 | 0 | 0 | 1 | 1 |
| ☐ | 2 | 2 | 0 | 0 | 1 | 1 |
| ☐ | ☐ | 2 | 1 | 2 | 1 | 1 |
| ☐ | 3 | 2 | 0 | 0 | 1 | 1 |
| ☐ | ☐ | 2 | 1 | 1 | 1 | 1 |
| ☐ | ☐ | 2 | 2 | 2 | 1 | 1 |
| ☐ | 4 | 2 | 0 | 0 | 1 | 1 |
| ☐ | ☐ | 2 | 1 | 1 | 1 | 1 |
| ☐ | ☐ | 2 | 2 | 2 | 1 | 1 |
| ☐ | ☐ | 2 | 3 | 3 | 1 | 1 |
| ☐ | 5 | 2 | 0 | 0 | 1 | -1 |
| ☐ | ☐ | 2 | 1 | 1 | 1 | -1 |
| ☐ | ☐ | 2 | 2 | 2 | 1 | -1 |
| ☐ | ☐ | 2 | 3 | 3 | 1 | -1 |
| ☐ | ☐ | 2 | 4 | 0 | 1 | 1 |
| ☐ | 6 | 2 | 0 | 0 | 1 | -1 |
| ☐ | ☐ | 2 | 1 | 1 | 1 | -1 |
| ☐ | ☐ | 2 | 2 | 2 | 1 | -1 |
| ☐ | ☐ | 2 | 3 | 3 | 1 | -1 |
| ☐ | ☐ | 2 | 4 | 0 | 1 | 1 |
| ☐ | ☐ | 2 | 5 | 1 | 1 | 1 |
| ☐ | 7 | 2 | 0 | 0 | 1 | -1 |
| ☐ | ☐ | 2 | 1 | 1 | 1 | -1 |
| ☐ | ☐ | 2 | 2 | 2 | 1 | -1 |
| ☐ | ☐ | 2 | 3 | 3 | 1 | -1 |
| ☐ | ☐ | 2 | 4 | 0 | 1 | 1 |
| ☐ | ☐ | 2 | 5 | 1 | 1 | 1 |

(continued)

| $N_{ss}$ | $N_{ss}^r$ | $M$ | $i_{ss}^r$ | $v_{i_{ss}}^r$ | $P_{i_{ss}}^r(0)$ | $P_{i_{ss}}^r(1)$ |
|---|---|---|---|---|---|---|
| □ | □ | 2 | 6 | 2 | 1 | 1 |
| □ | 8 | 2 | 0 | 0 | 1 | -1 |
| □ | □ | 2 | 1 | 1 | 1 | -1 |
| □ | □ | 2 | 2 | 2 | 1 | -1 |
| □ | □ | 2 | 3 | 3 | 1 | -1 |
| □ | □ | 2 | 4 | 0 | 1 | 1 |
| □ | □ | 2 | 5 | 1 | 1 | 1 |
| □ | □ | 2 | 6 | 2 | 1 | 1 |
| □ | □ | 2 | 7 | 3 | 1 | 1 |

First, a second frequency domain sequence of each spatial flow in the $r^{th}$ RB is obtained according to the first frequency domain sequence $\{L_k^r\}$, the maximum quantity $i_{ss\_max}$ of spatial flows, the cyclic shift parameter $v_{i_{ss}}^r$, and the orthogonal mapping matrix $P_{i_{ss}}^r(m)$.

The second frequency domain sequence $L_{k,m}^{i_{ss}^r}$ corresponding to the $i_{ss}^{th}$ spatial flow in the $r^{th}$ RB may be indicated by $L_{k,m}^{i_{ss}^r} = L_k^r \exp\left(j2\pi \dfrac{v_{i_{ss}}^r}{i_{ss\_max}} k\right) P_{i_{ss}}^r(m), k = -\dfrac{N_{FFT}}{2}, \cdots, \dfrac{N_{FFT}}{2} - 1, m = 0,1,\cdots M-1$,

where $i_{ss}^r = \begin{cases} l & u = 0, \quad l = 0,1,\cdots N_{ss,0}^r - 1 \\ \displaystyle\sum_{u'=0}^{u-1} N_{ss,u'}^r + l & u = 1,\cdots N_u^r - 1, \quad l = 0,1,\cdots N_{ss,u}^r - 1 \end{cases}$.

Then, inverse Fourier transform is performed on the second frequency domain sequence to obtain a second time domain sequence corresponding to each spatial flow. For example, inverse Fourier transform is performed on the second frequency domain sequence $L_{k,m}^{i_{ss}^r}$ corresponding to the $i_{ss}^{th}$ spatial flow in the $r^{th}$ RB, to obtain the second time domain sequence $ltf_{n,m}^{i_{ss}^r} = IDFT\left[L_{k,m}^{i_{ss}^r}\right], n = 0,1,\cdots N_{FFT} - 1$ corresponding to the $i_{ss}^{th}$ spatial flow in the $r^{th}$ RB.

Finally, the second time domain sequences corresponding to all spatial flows in each RB are added up to obtain the LTF.

For example, the LTF actually sent by the AP may be indicated by $ltf_{n,m} = \displaystyle\sum_{r=0}^{9} \sum_{i_{ss}^r=0}^{N_{ss}^r-1} ltf_{n,m}^{i_{ss}^r}$ where *ltf*$_{n,m}$ indicates the LTF.

Correspondingly, the following uses the uth user of the rth RB as an example to describe a process of implementing channel estimation by the receive end. The receive end is, for example, a station.

Different from example 1, the length N is a quantity of subcarriers included in an RB, that is, 24.

A symbol quantity M and a spatial flow allocated to the uth user of the rth RB are determined according to the indication information.

In the parameter configuration table shown in Table 4, the cyclic shift parameter $v_{i_{ss}}^{r}$ and the orthogonal mapping matrix $P_{i_{ss}}^{r}(m)$ that are corresponding to the spatial flow $i_{ss}^{r}$ are determined according to the total quantity $N_{ss}$ of spatial flows, the total quantity $N_{ss}^{r}$ of spatial flows in the rth RB, and the number $i_{ss}^{r}$ of the spatial flow.

A window function is determined according to the cyclic shift parameter $v_{i_{ss}}^{r}$, the maximum quantity $i_{ss\_max}$ of spatial flows, and the length N. In this embodiment, for example, a rectangular window function $W_t$ is determined, and the window function is as follows:

$$w_t^{i_{ss}^{r}} = \begin{cases} 1 & \dfrac{v_{i_{ss}}^{r} N}{i_{ss\_max}} \le t < \dfrac{\left(v_{i_{ss}}^{r}+1\right)N}{i_{ss\_max}} \\ 0 & 0 \le t < \dfrac{v_{i_{ss}}^{r} N}{i_{ss\_max}}, \dfrac{\left(v_{i_{ss}}^{r}+1\right)N}{i_{ss\_max}} \le t < N \end{cases}.$$

The received LTF {$y_m$} is merged according to the number $i_{ss}^{r}$ of the spatial flow and the orthogonal mapping matrix $P_{i_{ss}}^{r}(m)$ of the uth user of the rth RB. An LTF obtained after the merging is

$$y^{i_{ss}^{r}} = \sum_{m=0}^{M-1} y_m P_{i_{ss}}^{r}(m).$$

The LTF $y^{i_{ss}^{r}}$ obtained after the merging is processed to obtain a second estimated time domain sequence.

Specifically, CP removal processing is performed on the $y^{i_{ss}^{r}}$ symbol to obtain the second estimated time domain sequence.

Then, $N_{FFT}$-point Fourier transform is performed on the second estimated time domain sequence to obtain a first estimated frequency domain sequence $Y^{i_{ss}^{r}}$, where $Y^{i_{ss}^{r}} = DFT\left[y^{i_{ss}^{r}}\right]$.

Next, at least one second estimated frequency domain sequence corresponding to locations and a quantity that are of consecutive available subcarriers and corresponding to the receive end is extracted from the first estimated frequency domain sequence $Y^{i_{ss}^{r}}$. For example, the extracted second estimated frequency domain sequence is

$$\left\{ Y^{i_{ss}^r}_{k_1} \right\}, k_1 = \begin{cases} \{8+r\times 24-128,\cdots 8+r\times 24+23-128\}, 0\le r<5 \\ \{8+r\times 24+1-128,\cdots 8+r\times 24+24-128\}, 5\le r<10 \end{cases}.$$

Next, N-point inverse Fourier transform is performed on the second estimated frequency domain sequence $\left\{ Y^{i_{ss}^r}_{k_1} \right\}$ to obtain a third estimated time domain sequence $y^{i_{ss}^r}_{n_1}$, where

$$y^{i_{ss}^r}_{n_1} = IDFT\left[ Y^{i_{ss}^r}_{k_1} \right], n_1 = 0,1,\cdots N-1 .$$

Then, the third estimated time domain sequence $y^{i_{ss}^r}_{n_1}$ and a first time domain sequence $\{x_n\}$ are processed by using the foregoing determined window function, to obtain a fourth estimated time domain sequence. Specifically, the fourth estimated time domain sequence may be indicated by $h^{i_{ss}^r}_{t_1} = w^{i_{ss}^r}_{t_1} \sum_{n_1=0}^{N-1} y^{i_{ss}^r}_{n_1} x_{n_1-t_1}$ where a left side of the equation indicates the fourth estimated time domain sequence, and a right side of the equation indicates an operational formula. A cross-correlation operation is performed on the third estimated time domain sequence and the first time domain sequence, and then, a windowing operation is performed by using the window function.

Next, N-point Fourier transform is separately performed on the fourth estimated time domain sequence to obtain a frequency domain channel estimation value corresponding to the spatial flow. Specifically, N-point Fourier transform is performed on $h^{i_{ss}^r}_{t_1}$, which may be indicated by a formula $H^{i_{ss}^r}_{s_1} = DFT\left[ h^{i_{ss}^r}_{t_1} \right], s_1 = 0,1,\cdots N-1 .$

Therefore, the frequency domain channel estimation value of the spatial flow of the $u^{th}$ user of the $r^{th}$ RB may be indicated by

$$\begin{cases} \left\{ \underbrace{0,\cdots,0}_{8+r\times24}, H^{i_{ss}^r}_{s_1=0}, \cdots H^{i_{ss}^r}_{s_1=N-1}, \underbrace{0,\cdots0}_{1+r\times24+7} \right\}, 0\le r<5 \\ \left\{ \underbrace{0,\cdots,0}_{8+r\times24+1}, H^{i_{ss}^r}_{s_1=0}, \cdots H^{i_{ss}^r}_{s_1=N-1}, \underbrace{0,\cdots0}_{r\times24+7} \right\}, 5\le r<10 \end{cases}.$$

Example 6: In this embodiment, the transmit end is, for example, a station and is applied in uplink transmission, and the receive end is, for example, an AP. Generally, uplink data transmission is scheduled by the AP, and the AP first sends a next or next several uplink resource indications in a downlink frame, which is different from example 1. It is assumed that in the uplink resource indication, a total quantity of spatial flows transmitted on bandwidth of the $r^{th}$ RB is set to $N^r_{ss}$ during this time of uplink transmission, where $r= 0,1,...9$. A total of $N^r_u$ users share this RB. $N^r_{ss,u}$ is a quantity of spatial flows transmitted by the $u^{th}$ user on bandwidth of the $r^{th}$ RB, where $u=0,1,\cdots N^r_u-1$.

Remaining steps are the same as those in example 5.

For a process of performing channel estimation by the receive end, in step 203 in this embodiment, an LTF quantity M and a spatial flow corresponding to the receive end are determined according to the indication information, which is different from example 4. The spatial flow corresponding to the receive end is specifically a spatial flow $i^r_{ss}$ separately transmitted by each user on the bandwidth of the $r^{th}$ RB. The indication information is specifically obtained from the uplink resource indication sent by the AP. Remaining steps are the same as those in example 5.

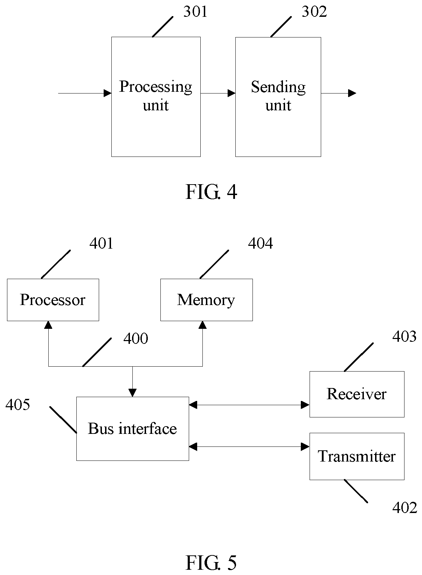

Based on a same invention concept, an embodiment of this application further provides a data sending apparatus. For definitions of related terms and specific implementation of the data sending apparatus shown in FIG. 4, reference may be made to related descriptions of FIG. 2, FIG. 3 and the foregoing embodiments.

As shown in FIG. 4, the data sending apparatus includes: a processing unit 301, configured to: perform Fourier transform on a first time domain sequence to obtain a first frequency domain sequence, where the first time domain sequence is a sequence with an autocorrelation property; determine, according to a maximum multipath delay of a system transmission channel, bandwidth of the channel, and a subcarrier quantity $N_{FFT}$, a maximum quantity of spatial flows that can be supported by a single symbol; determine, in a parameter configuration table according to a total quantity of spatial flows, a cyclic shift parameter corresponding to each spatial flow, where the cyclic shift parameter represents a time sequence shift value of the first time domain sequence; and obtain a long training field LTF according to the first frequency domain sequence, the maximum quantity of spatial flows, and the cyclic shift parameter; and a sending unit 302, configured to send the LTF and indication information to each receive end, where the indication information includes a number of a spatial flow allocated to each receive end.

Optionally, the processing unit 301 is further configured to determine a symbol quantity according to the total quantity of spatial flows and the maximum quantity of spatial flows.

Optionally, the processing unit 301 is further configured to: determine, in the parameter configuration table according to the total quantity of spatial flows, an orthogonal mapping matrix corresponding to each spatial flow; and obtain the LTF according to the first frequency domain sequence, the maximum quantity of spatial flows, the cyclic shift parameter, and the orthogonal mapping matrix.

With reference to the foregoing embodiments, the parameter configuration table includes a correspondence between the cyclic shift parameter and each spatial flow within the total quantity of spatial flows.

Optionally, the processing unit 301 is specifically configured to: obtain a second frequency domain sequence of each spatial flow according to the first frequency domain sequence, the maximum quantity of spatial flows, the cyclic shift parameter, and the orthogonal mapping matrix; perform inverse Fourier transform on the second frequency domain sequence to obtain a second time domain sequence corresponding to each spatial flow; and add up second time domain sequences corresponding to all the spatial flows, to obtain the LTF.

With reference to the foregoing embodiments, the processing unit 301 is specifically configured to: divide the subcarrier quantity $N_{FFT}$ by the bandwidth to obtain an inverse discrete Fourier transform IDFT period of an orthogonal frequency division multiplexing OFDM symbol; and divide the IDFT period by the maximum multipath delay to obtain the maximum quantity of spatial flows that can be supported by a single symbol.

With reference to the foregoing embodiments, a length of the first time domain sequence is N, and N is a quantity of consecutive available subcarriers of the channel or a quantity of subcarriers included in a resource block; and a length of the first frequency domain sequence is the subcarrier quantity $N_{FFT}$.

Changing manners and specific examples of the data sending method in the foregoing embodiment of FIG. 2 are also applicable to the data sending apparatus in this embodiment. According to the foregoing detailed descriptions of the data sending method, a person skilled in the art may clearly learn a method for implementing the data sending apparatus in this embodiment. For brevity of the specification, details are not described herein.

Based on a same invention concept, this embodiment further provides a transmit-end device such as a wireless local area network access point or a station. For definitions of related terms and specific implementation of the transmit-end device shown in FIG. 5, reference may be made to related descriptions of FIG. 2, FIG. 3 and the foregoing embodiments.

As shown in FIG. 5, FIG. 5 is a schematic diagram of hardware of a transmit-end device according to this embodiment. The transmit-end device includes: a processor 401, configured to: perform Fourier transform on a first time domain sequence to obtain a first frequency domain sequence, where the first time domain sequence is a sequence with an autocorrelation property; determine, according to a maximum multipath delay of a system transmission channel, bandwidth of the channel, and a subcarrier quantity $N_{FFT}$, a maximum quantity of spatial flows that can be supported by a single symbol; determine, in a parameter configuration table according to a total quantity of spatial flows, a cyclic shift parameter corresponding to each spatial flow, where the cyclic shift parameter represents a time sequence shift value of the first time domain sequence; and obtain a long training field LTF according to the first frequency domain sequence, the maximum quantity of spatial flows, and the cyclic shift parameter; and a transmitter 402, configured to send the LTF and indication information to each receive end, where the indication information includes a number of a spatial flow allocated to each receive end.

Optionally, the processor 401 is further configured to determine a symbol quantity according to the total quantity of spatial flows and the maximum quantity of spatial flows.

Optionally, the processor 401 is further configured to: determine, in the parameter configuration table according to the total quantity of spatial flows, an orthogonal mapping matrix corresponding to each spatial flow; and obtain the LTF according to the first frequency domain sequence, the maximum quantity of spatial flows, the cyclic shift parameter, and the orthogonal mapping matrix.

With reference to the foregoing embodiments, the parameter configuration table includes a correspondence between the cyclic shift parameter and each spatial flow within the total quantity of spatial flows.

Optionally, the processor 401 is specifically configured to: obtain a second frequency domain sequence of each spatial flow according to the first frequency domain sequence, the maximum quantity of spatial flows, the cyclic shift parameter, and the orthogonal mapping matrix; perform inverse Fourier transform on the second frequency domain sequence to obtain a second time domain sequence corresponding to each spatial flow; and add up second time domain sequences corresponding to all the spatial flows, to obtain the LTF.

With reference to the foregoing embodiments, the processor 401 is specifically configured to:

divide the subcarrier quantity $N_{FFT}$ by the bandwidth to obtain an inverse discrete Fourier transform IDFT period of an orthogonal frequency division multiplexing OFDM symbol; and

divide the IDFT period by the maximum multipath delay to obtain the maximum quantity of spatial flows that can be supported by a single symbol.

With reference to the foregoing embodiments, a length of the first time domain sequence is N, and N is a quantity of consecutive available subcarriers of the channel or a quantity of subcarriers included in a resource block; and a length of the first frequency domain sequence is the subcarrier quantity $N_{FFT}$.

Further, a bus architecture (represented by a bus 400) is shown in FIG. 5. The bus 400 may include any quantity of interconnected buses and bridges. The bus 400 links various circuits that include one or more processors represented by the processor 401 and a memory represented by a memory 404. The bus 400 may further link various other circuits, such as a peripheral device circuit, a voltage regulator circuit, and a power management circuit, which is all well known in the art, and therefore, is not further described in this specification. A bus interface 405 provides an interface between the bus 400 and each of a receiver 403 and the transmitter 402. The receiver 403 and the transmitter 402 may be a same component, that is, a transceiver, to provide a unit configured to communicate, on a transmission medium, with various other apparatuses.

A user interface such as a keypad, a display, a speaker, a microphone, or a joystick may be further provided depending on a property of the receive-end device.

The processor 401 is responsible for managing the bus 400 and general processing. The memory 404 may be configured to store data used by the processor 401 when performing an operation. Further, the parameter configuration table is stored in the memory 404.

Changing manners and specific examples of the data sending method in the foregoing embodiment of FIG. 2 are also applicable to the transmit-end device in this embodiment. According to the foregoing detailed descriptions of the data sending method, a person skilled in the art may clearly learn a method for implementing the transmit-end device in this embodiment. For brevity of the specification, details are not described herein.

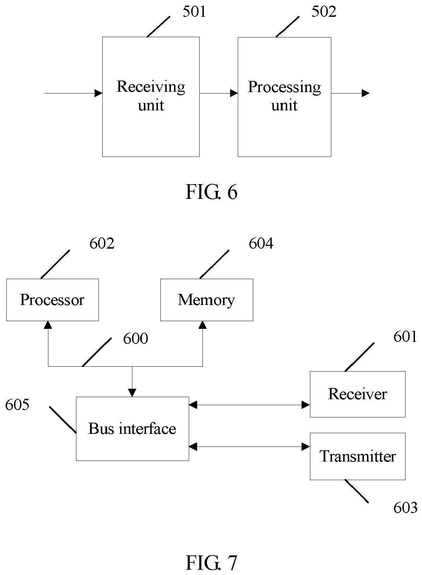

Based on a same invention concept, this embodiment provides a channel estimation apparatus. As shown in FIG. 6, the channel estimation apparatus includes: a receiving unit 501, configured to receive a long training field LTF and indication information that are sent by a transmit end, where the indication information includes a number of a spatial flow allocated to a receive end; and a processing unit 502, configured to: obtain a total quantity of spatial flows and a maximum quantity of spatial flows that can be supported by a single symbol; determine, in a parameter configuration table according to the total quantity of spatial flows and the number of the spatial flow, a cyclic shift parameter corresponding to the spatial flow, where the cyclic shift parameter represents a time sequence shift value of a first time domain sequence, and the first time domain sequence is a sequence with an autocorrelation property; and determine, according to the cyclic shift parameter, the maximum quantity of spatial flows, the first time domain sequence, a length N of the first time domain sequence, the number of the spatial flow, and the received LTF, a frequency domain channel estimation value corresponding to the spatial flow.

Optionally, the processing unit 502 is further configured to: determine, in the parameter configuration table according to the total quantity of spatial flows and the number of the spatial flow, an orthogonal mapping matrix corresponding to the spatial flow; and determine, according to the cyclic shift parameter, the maximum quantity of spatial flows, the first time domain sequence, the length N of the first time domain sequence, the number of the spatial flow, the orthogonal mapping matrix, and the received LTF, the frequency domain channel estimation value corresponding to the spatial flow.

Optionally, the processing unit 502 is configured to: determine a window function according to the cyclic shift parameter, the maximum quantity of spatial flows that can be supported by a single symbol, and the length N of the first time domain sequence; merge the received LTF according to the number of the spatial flow and the orthogonal mapping matrix; obtain a second estimated time domain sequence according to an LTF obtained after the merging; perform Fourier transform on the second estimated time domain sequence to obtain a first estimated frequency domain sequence; extract, from the first frequency domain sequence, at least one second estimated frequency domain sequence corresponding to locations and a quantity that are of consecutive available subcarriers and corresponding to the receive end;

perform inverse Fourier transform on the at least one second estimated frequency domain sequence to obtain at least one third estimated time domain sequence; process the at least one third time domain sequence and the first time domain sequence by using the window function, to obtain at least one fourth estimated time domain sequence; and separately perform Fourier transform on the at least one fourth estimated time domain sequence to obtain the frequency domain channel estimation value corresponding to the spatial flow.

With reference to the foregoing embodiments, the length N of the first time domain sequence is specifically a quantity of consecutive available subcarriers of the channel or a quantity of subcarriers included in a resource block is the length N.

With reference to the foregoing embodiments, the parameter configuration table includes a correspondence between the cyclic shift parameter and each spatial flow within the total quantity of spatial flows.

Changing manners and specific examples of the channel estimation method in the foregoing embodiment of FIG. 3 are also applicable to the channel estimation apparatus in this embodiment. According to the foregoing detailed descriptions of the channel estimation method, a person skilled in the art may clearly learn a method for implementing the channel estimation apparatus in this embodiment. For brevity of the specification, details are not described herein.

Based on a same invention concept, this embodiment provides a receive-end device. As shown in FIG. 7, FIG. 7 is a schematic diagram of hardware of a receive-end device according to this embodiment. The receive-end device includes: a receiver 601, configured to receive a long training field LTF and indication information that are sent by a transmit end, where the indication information includes a number of a spatial flow allocated to a receive end; and a processor 602, configured to: obtain a total quantity of spatial flows and a maximum quantity of spatial flows that can be supported by a single symbol; determine, in a parameter configuration table according to the total quantity of spatial flows and the number of the spatial flow, a cyclic shift parameter corresponding to the spatial flow, where the cyclic shift parameter represents a time sequence shift value of a first time domain sequence, and the first time domain sequence is a sequence with an autocorrelation property; and determine, according to the cyclic shift parameter, the maximum quantity of spatial flows, the first time domain sequence, a length N of the first time domain sequence, the number of the spatial flow, and the received LTF, a frequency domain channel estimation value corresponding to the spatial flow.

Optionally, the processor 602 is further configured to: determine, in the parameter configuration table according to the total quantity of spatial flows and the number of the spatial flow, an orthogonal mapping matrix corresponding to the spatial flow; and determine, according to the cyclic shift parameter, the maximum quantity of spatial flows, the first time domain sequence, the length N of the first time domain sequence, the number of the spatial flow, the orthogonal mapping matrix, and the received LTF, the frequency domain channel estimation value corresponding to the spatial flow.

Optionally, the processor 602 is configured to: determine a window function according to the cyclic shift parameter, the maximum quantity of spatial flows that can be supported by a single symbol, and the length N of the first time domain sequence; merge the received LTF according to the number of the spatial flow and the orthogonal mapping matrix; obtain a second estimated time domain sequence according to an LTF obtained after the merging; perform Fourier transform on the second estimated time domain sequence to obtain a first estimated frequency domain sequence; extract, from the first frequency domain sequence, at least one second estimated frequency domain sequence corresponding to locations and a quantity that are of consecutive available subcarriers and corresponding to the receive end; perform inverse Fourier transform on the at least one second estimated frequency domain sequence to obtain at least one third estimated time domain sequence; process the at least one third time domain sequence and the first time domain sequence by using the window function, to obtain at least one fourth estimated time domain sequence; and separately perform Fourier transform on the at least one fourth estimated time domain sequence to obtain the frequency domain channel estimation value corresponding to the spatial flow.

With reference to the foregoing embodiments, the length N of the first time domain sequence is specifically a quantity of consecutive available subcarriers of the channel or a quantity of subcarriers included in a resource block is the length N.

With reference to the foregoing embodiments, the parameter configuration table includes a correspondence between the cyclic shift parameter and each spatial flow within the total quantity of spatial flows.

Further, a bus architecture (represented by a bus 600) is shown in FIG. 7. The bus 600 may include any quantity of interconnected buses and bridges. The bus 600 links various circuits that include one or more processors represented by the processor 602 and a memory represented by a memory 604. The bus 600 may further link various other circuits, such as a peripheral device circuit, a voltage regulator circuit, and a power management circuit, which is all well known in the art, and therefore, is not further described in this specification. A bus interface 605 provides an interface between the bus 600 and each of the receiver 601 and a transmitter 603. The receiver 601 and the transmitter 603 may be a same component, that is, a transceiver, to provide a unit configured to communicate, on a transmission medium, with various other apparatuses.

A user interface such as a keypad, a display, a speaker, a microphone, or a joystick may be further provided depending on a property of the receive-end device.

The processor 602 is responsible for managing the bus 600 and general processing. The memory 604 may be configured to store data used by the processor 602 when performing an operation. For example, the parameter configuration table is stored in the memory 604.

Changing manners and specific examples of the channel estimation method in the foregoing embodiment of FIG. 3 are also applicable to the receive-end device in this embodiment. According to the foregoing detailed descriptions of the channel estimation method, a person skilled in the art may clearly learn a method for implementing the receive-end device in this embodiment. For brevity of the specification, details are not described herein.

One or more technical solutions provided in the embodiments of this application have at least the following technical effects or advantages:

In the embodiments of this application, Fourier transform is performed on a first time domain sequence with an autocorrelation property to obtain a first frequency domain sequence; a maximum quantity of spatial flows that can be supported by a single symbol is determined according to a maximum multipath delay of a channel, bandwidth of the channel, and a subcarrier quantity; then, a cyclic shift parameter corresponding to each spatial flow is determined in a parameter configuration table according to a total quantity of spatial flows, where the cyclic shift parameter represents a time sequence shift value of the first time domain sequence; and then, an LTF is obtained according to the first frequency domain sequence, the maximum quantity of spatial flows, and the cyclic shift parameter. Therefore, in the embodiments, a sequence with an autocorrelation property is used as a sequence used for an LTF.

Then, symbols used for spatial flows in a multi-spatial-flow scenario are distinguished by using different cyclic shift parameters. Two spatial flows may be distinguished by performing at least one time of shift. Therefore, for eight spatial flows, only a maximum of four symbols need to be sent in each spatial flow. Therefore, according to the methods in the embodiments, channel estimation may be implemented, where a quantity of symbols that need to be sent in each spatial flow is less than a quantity of symbols that are sent in the prior art, so as to reduce system overheads, and in particular, reduce system overheads in a parameter configuration with a relatively large quantity of subcarriers and a relatively long guard interval.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams. These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Apparently, a person skilled in the art can make various modifications and variations to this application without departing from the scope of this application. This application is intended to cover these modifications and variations of this application provided that these modifications and variations of this application fall within the scope of protection defined by the following claims and their equivalent technologies.

**Claims**

1. A data sending method, comprising:

   performing (101) Fourier transform on a first time domain sequence to obtain a first frequency domain sequence, wherein the first time domain sequence is a Zadoff-Chu sequence, a Frank sequence, a Golomb multiphase sequence, or a Chirp sequence, and a length N of the first time domain sequence corresponds to a quantity of consecutive available subcarriers or a quantity of subcarriers included in a resource block;

determining (102), according to a maximum multipath delay of a system transmission channel, bandwidth of the channel, and a subcarrier quantity $N_{FFT}$, a maximum quantity of spatial flows that can be supported by a single Orthogonal Frequency Division Multiplexing, OFDM, symbol, comprising: dividing the subcarrier quantity $N_{FFT}$ by the bandwidth of the channel to obtain an Inverse Discrete Fourier Transform, IDFT, period of an OFDM symbol; and dividing the IDFT period of the OFDM symbol by the maximum multipath delay of the system transmission channel to obtain the maximum quantity of spatial flows that can be supported by a single OFDM symbol;

determining (103), in a parameter configuration table according to a total quantity of spatial flows, a cyclic shift parameter corresponding to each spatial flow, wherein the cyclic shift parameter represents a time sequence shift value of the first time domain sequence;

obtaining (104) a long training field, LTF, according to the first frequency domain sequence, the maximum quantity of spatial flows, and the cyclic shift parameter, comprising obtaining a second frequency domain sequence of each spatial flow according to the first frequency domain sequence, the maximum quantity of spatial flows, and the cyclic shift parameter, performing inverse Fourier transform on the second frequency domain sequence to obtain a second time domain sequence corresponding to each spatial flow; and adding up the second time domain sequences corresponding to all the spatial flows, to obtain the LTF, wherein the second frequency domain sequence of each spatial flow includes frequency domain sequences of all OFDM symbols of each spatial flow; and

sending (105) the LTF and indication information to each receive end, wherein the indication information comprises a number of a spatial flow allocated to each receive end.

2. The method according to claim 1, wherein the indication information further comprises OFDM symbol data of each receive end, and the OFDM symbol quantity is obtained by performing the following step:
determining the OFDM symbol quantity according to the total quantity of spatial flows and the maximum quantity of spatial flows.

3. The method according to claim 1 or 2, wherein the method further comprises:

determining, in the parameter configuration table according to the total quantity of spatial flows, an orthogonal mapping matrix corresponding to each spatial flow; wherein
the obtaining (104) a long training field LTF according to the first frequency domain sequence, the maximum quantity of spatial flows, and the cyclic shift parameter comprises:

obtaining the second frequency domain sequence of each spatial flow according to the first frequency domain sequence, the maximum quantity of spatial flows, the cyclic shift parameter, and the orthogonal mapping matrix.

4. The method according to any one of claims 1 to 3, wherein the parameter configuration table comprises a correspondence between the cyclic shift parameter and each spatial flow within the total quantity of spatial flows.

5. A channel estimation method, comprising:

receiving (201) a long training field, LTF, and indication information that are sent by a transmit end, wherein the indication information comprises a number of a spatial flow allocated to a receive end;
obtaining (202) a total quantity of spatial flows and a maximum quantity of spatial flows that can be supported by a single Orthogonal Frequency Division Multiplexing, OFDM, symbol, comprising: dividing the subcarrier quantity $N_{FFT}$ by the bandwidth of the channel to obtain an Inverse Discrete Fourier Transform, IDFT, period of an OFDM symbol; and dividing the IDFT period of the OFDM symbol by the maximum multipath delay of the system transmission channel to obtain the maximum quantity of spatial flows that can be supported by a single OFDM symbol, or receiving the total quantity of spatial flows sent by the transmit end and the maximum quantity of spatial flows that can be supported by a single symbol;
determining (203), in a parameter configuration table according to the total quantity of spatial flows and the number of the spatial flow, a cyclic shift parameter corresponding to the spatial flow, wherein the cyclic shift parameter represents a time sequence shift value of a first time domain sequence, and the first time domain sequence is a Zadoff-Chu sequence, a Frank sequence, a Golomb multiphase sequence, or a Chirp sequence;

and

determining (204), according to the cyclic shift parameter, the maximum quantity of spatial flows, the first time domain sequence, a length N of the first time domain sequence, the number of the spatial flow, and the received LTF, a frequency domain channel estimation value corresponding to the spatial flow.

6. The method according to claim 5, wherein the method further comprises:

determining, in the parameter configuration table according to the total quantity of spatial flows and the number of the spatial flow, an orthogonal mapping matrix corresponding to the spatial flow; and
the determining (204), according to the cyclic shift parameter, the maximum quantity of spatial flows, the first time domain sequence, a length N of the first time domain sequence, the number of the spatial flow, and the received LTF, a frequency domain channel estimation value corresponding to the spatial flow comprises:

determining, according to the cyclic shift parameter, the maximum quantity of spatial flows, the first time domain sequence, the length N of the first time domain sequence, the number of the spatial flow, the orthogonal mapping matrix, and the received LTF, the frequency domain channel estimation value corresponding to the spatial flow.

7. The method according to claim 6, wherein the determining, according to the cyclic shift parameter, the maximum quantity of spatial flows that can be supported by a single OFDM symbol, the first time domain sequence, the length N of the first time domain sequence, the orthogonal mapping matrix, and the received LTF, the frequency domain channel estimation value corresponding to the spatial flow comprises:

determining a window function according to the cyclic shift parameter, the maximum quantity of spatial flows that can be supported by a single OFDM symbol, and the length N of the first time domain sequence;
merging the received LTF according to the number of the spatial flow and the orthogonal mapping matrix;
obtaining a second estimated time domain sequence according to an LTF obtained after the merging;
performing Fourier transform on the second estimated time domain sequence to obtain a first estimated frequency domain sequence;
extracting, from the first frequency domain sequence, at least one second estimated frequency domain sequence corresponding to locations and a quantity that are of consecutive available subcarriers and corresponding to the receive end;
performing inverse Fourier transform on the at least one second estimated frequency domain sequence to obtain at least one third estimated time domain sequence;
processing the at least one third time domain sequence and the first time domain sequence by using the window function, to obtain at least one fourth estimated time domain sequence; and
separately performing Fourier transform on the at least one fourth estimated time domain sequence to obtain the frequency domain channel estimation value corresponding to the spatial flow.

8. The method according to any one of claims 5 to 7, wherein the length N of the first time domain sequence is specifically a quantity of consecutive available subcarriers of the channel or a quantity of subcarriers comprised in a resource block is the length N.

9. The method according to any one of claims 5 to 8, wherein the parameter configuration table comprises a correspondence between the cyclic shift parameter and each spatial flow within the total quantity of spatial flows.

10. A data sending apparatus, comprising:

a processing unit (301), configured to: perform Fourier transform on a first time domain sequence to obtain a first frequency domain sequence, wherein the first time domain sequence is a Zadoff-Chu sequence, a Frank sequence, a Golomb multiphase sequence, or a Chirp sequence, and a length N of the first time domain sequence corresponds to a quantity of consecutive available subcarriers or a quantity of subcarriers included in a resource block; determine, according to a maximum multipath delay of a system transmission channel, bandwidth of the channel, and a subcarrier quantity $N_{FFT}$, a maximum quantity of spatial flows that can be supported by a single Orthogonal Frequency Division Multiplexing, OFDM, symbol, comprising: dividing the subcarrier quantity $N_{FFT}$ by the bandwidth of the channel to obtain an Inverse Discrete Fourier Transform, IDFT, period of an OFDM symbol; and dividing the IDFT period of the OFDM symbol by the maximum multipath delay of the system transmission channel to obtain the maximum quantity of spatial flows that can be supported by a single OFDM symbol; determine, in a parameter configuration table according to a total quantity of spatial flows, a cyclic shift parameter corresponding to each spatial flow, wherein the cyclic shift parameter represents a time sequence shift value of the first time domain sequence; obtain a long training field, LTF, according to the first frequency domain sequence, the maximum quantity of spatial flows, and the cyclic shift parameter, comprising obtaining a second frequency domain sequence of each spatial flow according to the first frequency domain sequence, the maximum quantity of spatial flows, and the cyclic shift parameter, performing inverse Fourier transform on the second frequency domain sequence to obtain a second time domain sequence corresponding to each spatial flow; and adding up the second time domain sequences corresponding to all the spatial flows, to obtain the LTF, wherein the second frequency domain sequence of each spatial flow includes frequency domain sequences of all OFDM symbols of each spatial flow; and

a sending unit (302), configured to send the LTF and indication information to each receive end, wherein the indication information comprises a number of a spatial flow allocated to each receive end.

11. The apparatus according to claim 10, wherein the processing unit (301) is further configured to determine a OFDM symbol quantity according to the total quantity of spatial flows and the maximum quantity of spatial flows.

12. The apparatus according to claim 10 or 11, wherein the processing unit (301) is further configured to: determine, in the parameter configuration table according to the total quantity of spatial flows, an orthogonal mapping matrix corresponding to each spatial flow; and obtain the second frequency domain sequence of each spatial flow according to the first frequency domain sequence, the maximum quantity of spatial flows, the cyclic shift parameter, and the orthogonal mapping matrix.

13. A channel estimation apparatus, comprising:

a receiving unit (501), configured to receive a long training field, LTF, and indication information that are sent by a transmit end, wherein the indication information comprises a number of a spatial flow allocated to a receive end; and

a processing unit (502), configured to: obtain a total quantity of spatial flows and a maximum quantity of spatial flows that can be supported by a single Orthogonal Frequency Division Multiplexing, OFDM, symbol, comprising: dividing the subcarrier quantity $N_{FFT}$ by the bandwidth of the channel to obtain an Inverse Discrete Fourier Transform, IDFT, period of an OFDM symbol; and dividing the IDFT period of the OFDM symbol by the maximum multipath delay of the system transmission channel to obtain the maximum quantity of spatial flows that can be supported by a single OFDM symbol, or receiving the total quantity of spatial flows sent by the transmit end and the maximum quantity of spatial flows that can be supported by a single symbol; determine, in a parameter configuration table according to the total quantity of spatial flows and the number of the spatial flow, a cyclic shift parameter corresponding to the spatial flow, wherein the cyclic shift parameter represents a time sequence shift value of a first time domain sequence, and the first time domain sequence is a Zadoff-Chu sequence, a Frank sequence, a Golomb multiphase sequence, or a Chirp sequence; and determine, according to the cyclic shift parameter, the maximum quantity of spatial flows, the first time domain sequence, a length N of the first time domain sequence, the number of the spatial flow, and the received LTF, a frequency domain channel estimation value corresponding to the spatial flow.

14. The apparatus according to claim 13, wherein the processing unit (502) is further configured to: determine, in the parameter configuration table according to the total quantity of spatial flows and the number of the spatial flow, an orthogonal mapping matrix corresponding to the spatial flow; and determine, according to the cyclic shift parameter, the maximum quantity of spatial flows, the first time domain sequence, the length N of the first time domain sequence, the number of the spatial flow, the orthogonal mapping matrix, and the received LTF, the frequency domain channel estimation value corresponding to the spatial flow.

15. The apparatus according to claim 14, wherein the processing unit (502) is configured to: determine a window function according to the cyclic shift parameter, the maximum quantity of spatial flows that can be supported by a single OFDM symbol, and the length N of the first time domain sequence; merge the received LTF according to the number of the spatial flow and the orthogonal mapping matrix; obtain a second estimated time domain sequence according to an LTF obtained after the merging; perform Fourier transform on the second estimated time domain sequence to obtain a first estimated frequency domain sequence; extract, from the first frequency domain sequence, at least one second estimated frequency domain sequence corresponding to locations and a quantity that are of consecutive available subcarriers and corresponding to the receive end; perform inverse Fourier transform on the at least one second estimated frequency domain sequence to obtain at least one third estimated time domain sequence; process the at least one third time domain sequence and the first time domain sequence by using the window function, to obtain at least one fourth estimated time domain sequence; and separately perform Fourier transform on the at least one fourth estimated time domain sequence to obtain the frequency domain channel estimation value corresponding to the spatial flow.

**Patentansprüche**

1. Datensendeverfahren, umfassend:

Ausführen (101) einer Fourier-Transformation an einer ersten Zeitbereichssequenz, um eine erste Frequenzbereichssequenz zu erhalten, wobei die erste Zeitbereichssequenz eine Zadoff-Chu-Sequenz, eine Frank-Sequenz, eine Golomb-Mehrphasensequenz oder eine Chirp-Sequenz ist, und wobei eine Länge N der ersten Zeitbereichssequenz einer Anzahl von aufeinanderfolgenden verfügbaren Teilträgern oder einer Anzahl von Teilträgern entspricht, die in einem Ressourcenblock enthalten ist;

Ermitteln (102), gemäß einer maximalen Mehrpfadverzögerung eines Systemübertragungskanals, einer Bandbreite des Kanals und einer Teilträgeranzahl NFFT, einer maximalen Anzahl von räumlichen Datenflüssen, die durch ein einziges orthogonalen Multiplexsymbol (Orthogonal Frequency Division Multiplexing Symbol, OFDM-Symbol) unterstützt werden kann, wobei das Ermitteln umfasst: Dividieren der Teilträgeranzahl NFFT durch die Bandbreite des Kanals, um eine inverse diskrete Fourier-Transformationsperiode (IDFT-Periode) eines OFDM-Symbols zu erhalten; und Dividieren der IDFT-Periode des OFDM-Symbols durch die maximale Mehrpfadverzögerung des Systemübertragungskanals, um die maximale Anzahl von räumlichen Datenflüssen zu erhalten, die durch ein einziges OFDM-Symbol unterstützt werden kann;

Ermitteln (103) in einer Parameterkonfigurationstabelle gemäß einer Gesamtanzahl von räumlichen Datenflüssen, eines zyklischen Verschiebeparameters, der jedem räumlichen Datenfluss entspricht, wobei der zyklische Verschiebeparameter einen Zeitsequenzverschiebewert der ersten Zeitbereichssequenz darstellt;

Erhalten (104) eines langen Trainingsfeldes, LTF, gemäß der ersten Frequenzbereichssequenz, der maximalen Anzahl von räumliche Datenflüssen und dem zyklischen Verschiebeparameter, wobei das Erhalten umfasst: Erhalten (104) einer zweiten Frequenzbereichssequenz von jedem räumlichen Datenfluss gemäß der ersten Frequenzbereichssequenz, der maximalen Anzahl von räumliche Datenflüssen und dem zyklischen Verschiebeparameter; Ausführen einer inversen Fourier-Transformation an der zweiten Frequenzbereichssequenz, um eine zweite Zeitbereichssequenz zu erhalten, die jedem räumlichen Datenfluss entspricht; und Addieren der zweiten Zeitbereichssequenzen, die allen räumliche Datenflüssen entsprechen, um das LTF zu erhalten, wobei die zweite Frequenzbereichssequenz von jedem räumlichen Datenfluss Frequenzbereichssequenzen von allen OFDM-Symbolen von jedem räumlichen Datenfluss enthält; und

Senden (105) des LTF und von Anzeigeinformationen an jedes Empfangsende, wobei die Anzeigeinformationen eine Nummer von einem räumlichen Datenfluss umfasst, der jedem Empfangsende zugeteilt wird.

2. Verfahren nach Anspruch 1, wobei die Anzeigeinformationen außerdem OFDM-Symboldaten von jedem Empfangsende umfassen und wobei die OFDM-Symbolanzahl erhalten wird, indem der folgende Schritt ausgeführt wird:

Ermitteln der OFDM-Symbolanzahl gemäß der Gesamtanzahl von räumlichen Datenflüssen und der maximalen Anzahl von räumlichen Datenflüssen.

3. Verfahren nach Anspruch 1 oder 2, wobei das Verfahren außerdem umfasst:

Ermitteln in der Parameterkonfigurationstabelle gemäß der Gesamtanzahl von räumlichen Datenflüssen, einer orthogonalen Abbildungsmatrix, die jedem räumlichen Datenfluss entspricht; wobei das Erhalten (104) eines langen Trainingsfeldes, LTF, gemäß der ersten Frequenzbereichssequenz, der maximalen Anzahl von räumliche Datenflüssen und dem zyklischen Verschiebeparameter umfasst:

Erhalten der zweiten Frequenzbereichssequenz von jedem räumlichen Datenfluss gemäß der ersten Frequenzbereichssequenz, der maximalen Anzahl von räumliche Datenflüssen, dem zyklischen Verschiebeparameter und der orthogonalen Abbildungsmatrix.

4. Verfahren nach einem der Ansprüche 1 bis 3, wobei die Parameterkonfigurationstabelle eine Übereinstimmung zwischen dem zyklischen Verschiebeparameter und jedem räumlichen Datenfluss in der Gesamtanzahl von räumlichen Datenflüssen umfasst.

5. Kanalschätzverfahren, umfassend:

Empfangen (201) eines langen Trainingsfeldes, LTF; und von Anzeigeinformationen, die von einem Übertragungsende gesendet werden, wobei die Anzeigeinformationen eine Nummer von einem räumlichen Datenfluss umfasst, der einem Empfangsende zugeteilt wird;

Erhalten (202) einer Gesamtanzahl von räumlichen Datenflüssen und einer maximalen Anzahl von räumlichen Datenflüssen, die durch ein einziges orthogonalen Multiplexsymbol (Orthogonal Frequency Division Multiplexing symbol, OFDM-Symbol) unterstützt werden kann, wobei das Erhalten umfasst: Dividieren der Teilträgeranzahl NFFT durch die Bandbreite des Kanals, um eine inverse diskrete Fourier-Transformationsperiode (IDFT-Periode) eines OFDM-Symbols zu erhalten; und Dividieren der IDFT-Periode des OFDM-Symbols durch die maximale Mehrpfadverzögerung des Systemübertragungskanals, um die maximale Anzahl von räumlichen Datenflüssen zu erhalten, die durch ein einziges OFDM-Symbol unterstützt werden kann; oder Empfangen der Gesamtanzahl von räumlichen Datenflüssen, die von dem Übertragungsende gesendet werden, und der maximalen Anzahl von räumlichen Datenflüssen, die durch ein einziges Symbol unterstützt werden kann;

Ermitteln (203) in einer Parameterkonfigurationstabelle gemäß der Gesamtanzahl von räumlichen Datenflüssen und der Nummer des räumlichen Datenflusses, eines zyklischen Verschiebeparameters, der dem räumlichen Datenfluss entspricht, wobei der zyklische Verschiebeparameter einen Zeitsequenzverschiebewert einer ersten Zeitbereichssequenz darstellt; und wobei die erste Zeitbereichssequenz eine Zadoff-Chu-Sequenz, eine Frank-Sequenz, eine Golomb-Mehrphasensequenz oder eine Chirp-Sequenz ist; und

Ermitteln (204) gemäß dem zyklischen Verschiebeparameter, der maximalen Anzahl von räumlichen Datenflüssen, der ersten Zeitbereichssequenz, einer Länge N der ersten Zeitbereichssequenz, der Nummer des räumlichen Datenflusses und dem empfangenen LTF, eines Frequenzbereichskanalschätzwertes, der dem räumlichen Datenfluss entspricht.

6. Verfahren nach Anspruch 5, wobei das Verfahren außerdem umfasst:

Ermitteln in der Parameterkonfigurationstabelle gemäß der Gesamtanzahl von räumlichen Datenflüssen und der Nummer des räumlichen Datenflusses, einer orthogonalen Abbildungsmatrix, die dem räumlichen Datenfluss entspricht; und

wobei das Ermitteln (204) gemäß dem zyklischen Verschiebeparameter, der maximalen Anzahl von räumlichen Datenflüssen, der ersten Zeitbereichssequenz, einer Länge N der ersten Zeitbereichssequenz, der Nummer des räumlichen Datenflusses und dem empfangenen LTF, eines Frequenzbereichskanalschätzwertes, der dem räumlichen Datenfluss entspricht, umfasst:

Ermitteln gemäß dem zyklischen Verschiebeparameter, der maximalen Anzahl von räumlichen Datenflüssen, der ersten Zeitbereichssequenz, der Länge N der ersten Zeitbereichssequenz, der Nummer des räumlichen Datenflusses, der orthogonalen Abbildungsmatrix und dem empfangenen LTF, des Frequenzbereichskanalschätzwertes, der dem räumlichen Datenfluss entspricht.

7. Verfahren nach Anspruch 6, wobei das Ermitteln gemäß dem zyklischen Verschiebeparameter, der maximalen Anzahl von räumlichen Datenflüssen, die von einem einzigen OFDM-Symbol unterstützt werden kann, der ersten Zeitbereichssequenz, der Länge N der ersten Zeitbereichssequenz, der orthogonalen Abbildungsmatrix und dem empfangenen LTF, des Frequenzbereichskanalschätzwertes, der dem räumlichen Datenfluss entspricht, umfasst:

Ermitteln einer Fensterfunktion gemäß dem zyklischen Verschiebeparameter, der maximalen Anzahl von räumlichen Datenflüssen, die von einem einzigen OFDM-Symbol unterstützt werden kann, und der Länge N der ersten Zeitbereichssequenz;

Zusammenführen des empfangenen LTF gemäß der Nummer des räumlichen Datenflusses und der orthogonalen Abbildungsmatrix;

Erhalten einer zweiten geschätzten Zeitbereichssequenz gemäß einem LTF, das nach dem Zusammenführen erhalten wurde;

Ausführen einer Fourier-Transformation an der zweiten geschätzten Zeitbereichssequenz, um eine erste geschätzte Frequenzbereichssequenz zu erhalten;

Extrahieren aus der ersten Frequenzbereichssequenz mindestens einer zweiten geschätzten Frequenzbereichssequenz, die Standorten und einer Anzahl entspricht, die von aufeinanderfolgenden verfügbaren Teilträgern stammen, und dem Empfangsende entsprechen;

Ausführen einer inversen Fourier-Transformation an der mindestens einen zweiten geschätzten Frequenzbereichssequenz, um mindestens eine dritte geschätzte Zeitbereichssequenz zu erhalten;

Verarbeiten der mindestens einen dritten Zeitbereichssequenz und der ersten Zeitbereichssequenz, indem die Fensterfunktion verwendet wird, um mindestens eine vierte geschätzte Zeitbereichssequenz zu erhalten; und separates Ausführen einer Fourier-Transformation an der mindestens einen vierten geschätzten Zeitbereichssequenz, um den Frequenzbereichskanalschätzwert zu erhalten, der dem räumlichen Datenfluss entspricht.

8. Verfahren nach einem der Ansprüche 5 bis 7, wobei die Länge N der ersten Zeitbereichssequenz insbesondere eine Anzahl von aufeinanderfolgenden verfügbaren Teilträgern des Kanals ist oder wobei die Länge N eine Anzahl von Teilträgern ist, die in einem Ressourcenblock enthalten sind.

9. Verfahren nach einem der Ansprüche 5 bis 8, wobei die Parameterkonfigurationstabelle eine Übereinstimmung zwischen dem zyklischen Verschiebeparameter und jedem räumlichen Datenfluss in der Gesamtanzahl von räumlichen Datenflüssen umfasst.

10. Datensendevorrichtung, umfassend:

eine Verarbeitungseinheit (301), die konfiguriert ist zum: Ausführen einer Fourier-Transformation an einer ersten Zeitbereichssequenz, um eine erste Frequenzbereichssequenz zu erhalten, wobei die erste Zeitbereichssequenz eine Zadoff-Chu-Sequenz, eine Frank-Sequenz, eine Golomb-Mehrphasensequenz oder eine Chirp-Sequenz ist, und wobei eine Länge N der ersten Zeitbereichssequenz einer Anzahl von aufeinanderfolgenden verfügbaren Teilträgern oder einer Anzahl von Teilträgern entspricht, die in einem Ressourcenblock enthalten ist; Ermitteln, gemäß einer maximalen Mehrpfadverzögerung eines Systemübertragungskanals, einer Bandbreite des Kanals und einer Teilträgeranzahl NFFT, einer maximalen Anzahl von räumlichen Datenflüssen, die durch ein einziges orthogonalen Multiplexsymbol (Orthogonal Frequency Division Multiplexing symbol, OFDM-Symbol) unterstützt werden kann, wobei das Ermitteln umfasst: Dividieren der Teilträgeranzahl NFFT durch die Bandbreite des Kanals, um eine inverse diskrete Fourier-Transformationsperiode, IDFT-Periode, eines OFDM-Symbols zu erhalten; und
Dividieren der IDFT-Periode des OFDM-Symbols durch die maximale Mehrpfadverzögerung des Systemübertragungskanals, um die maximale Anzahl von räumlichen Datenflüssen zu erhalten, die durch ein einziges OFDM-Symbol unterstützt werden kann; Ermitteln in einer Parameterkonfigurationstabelle gemäß einer Gesamtanzahl von räumlichen Datenflüssen, eines zyklischen Verschiebeparameters, der jedem räumlichen Datenfluss entspricht, wobei der zyklische Verschiebeparameter einen Zeitsequenzverschiebewert der ersten Zeitbereichssequenz darstellt;
Erhalten eines langen Trainingsfeldes, LTF, gemäß der ersten Frequenzbereichssequenz, der maximalen Anzahl von räumliche Datenflüssen und dem zyklischen Verschiebeparameter, wobei das Erhalten umfasst: Erhalten einer zweiten Frequenzbereichssequenz von jedem räumlichen Datenfluss gemäß der ersten Frequenzbereichssequenz, der maximalen Anzahl von räumliche Datenflüssen und dem zyklischen Verschiebeparameter; Ausführen einer inversen Fourier-Transformation an der zweiten Frequenzbereichssequenz, um eine zweite Zeitbereichssequenz zu erhalten, die jedem räumlichen Datenfluss entspricht; und
Addieren der zweiten Zeitbereichssequenzen, die allen räumliche Datenflüssen entsprechen, um das LTF zu erhalten, wobei die zweite Frequenzbereichssequenz von jedem räumlichen Datenfluss Frequenzbereichssequenzen von allen OFDM-Symbolen von jedem räumlichen Datenfluss enthält; und
eine Sendeeinheit (302), die konfiguriert ist zum Senden des LTF und von Anzeigeinformationen an jedes Empfangsende, wobei die Anzeigeinformationen eine Nummer von einem räumlichen Datenfluss umfasst, der jedem Empfangsende zugeteilt wird.

11. Vorrichtung nach Anspruch 10, wobei die Verarbeitungseinheit (301) außerdem konfiguriert ist zum Ermitteln der OFDM-Symbolanzahl gemäß der Gesamtanzahl von räumlichen Datenflüssen und der maximalen Anzahl von räumlichen Datenflüssen.

12. Vorrichtung nach Anspruch 10 oder 11, wobei die Verarbeitungseinheit (301) außerdem konfiguriert ist zum: Ermitteln in der Parameterkonfigurationstabelle gemäß der Gesamtanzahl von räumlichen Datenflüssen, einer orthogonalen Abbildungsmatrix, die jedem räumlichen Datenfluss entspricht; und zum Erhalten der zweiten Frequenzbereichssequenz von jedem räumlichen Datenfluss gemäß der ersten Frequenzbereichssequenz, der maximalen Anzahl von räumliche Datenflüssen dem zyklischen Verschiebeparameter und der orthogonalen Abbildungsmatrix.

13. Kanalschätzvorrichtung, umfassend:

eine Empfangseinheit (501), die konfiguriert ist zum Empfangen eines langen Trainingsfeldes, LTF; und von Anzeigeinformationen, die von einem Übertragungsende gesendet werden, wobei die Anzeigeinformationen eine Nummer von einem räumlichen Datenfluss umfasst, der einem Empfangsende zugeteilt wird; und eine Verarbeitungseinheit (502), die konfiguriert ist zum: Erhalten einer Gesamtanzahl von räumlichen Datenflüssen und einer maximalen Anzahl von räumlichen Datenflüssen, die durch ein einziges orthogonalen Multiplexsymbol (Orthogonal Frequency Division Multiplexing symbol, OFDM-Symbol) unterstützt werden kann, wobei das Erhalten umfasst: Dividieren der Teilträgeranzahl NFFT durch die Bandbreite des Kanals, um eine inverse diskrete Fourier-Transformationsperiode, IDFT-Periode, eines OFDM-Symbols zu erhalten; und Dividieren der IDFT-Periode des OFDM-Symbols durch die maximale Mehrpfadverzögerung des Systemübertragungskanals, um die maximale Anzahl von räumlichen Datenflüssen zu erhalten, die durch ein einziges OFDM-Symbol unterstützt werden kann; oder Empfangen der Gesamtanzahl von räumlichen Datenflüssen, die von dem Übertragungsende gesendet werden, und der maximalen Anzahl von räumlichen Datenflüssen, die durch ein einziges Symbol unterstützt werden kann; Ermitteln in einer Parameterkonfigurationstabelle gemäß der Gesamtanzahl von räumlichen Datenflüssen und der Nummer des räumlichen Datenflusses, eines zyklischen Verschiebeparameters, der dem räumlichen Datenfluss entspricht, wobei der zyklische Verschiebeparameter einen Zeitsequenzverschiebewert einer ersten Zeitbereichssequenz darstellt; und wobei die erste Zeitbereichssequenz eine Zadoff-Chu-Sequenz, eine Frank-Sequenz, eine Golomb-Mehrphasensequenz oder eine Chirp-Sequenz ist; und Ermitteln gemäß dem zyklischen Verschiebeparameter, der maximalen Anzahl von räumlichen Datenflüssen, der ersten Zeitbereichssequenz, einer Länge N der ersten Zeitbereichssequenz, der Nummer des räumlichen Datenflusses und dem empfangenen LTF, eines Frequenzbereichskanalschätzwertes, der dem räumlichen Datenfluss entspricht.

14. Vorrichtung nach Anspruch 13, wobei die Verarbeitungseinheit (502) außerdem konfiguriert ist zum: Ermitteln in der Parameterkonfigurationstabelle gemäß der Gesamtanzahl von räumlichen Datenflüssen und der Nummer des räumlichen Datenflusses, einer orthogonalen Abbildungsmatrix, die dem räumlichen Datenfluss entspricht; und Ermitteln gemäß dem zyklischen Verschiebeparameter, der maximalen Anzahl von räumlichen Datenflüssen, der ersten Zeitbereichssequenz, der Länge N der ersten Zeitbereichssequenz, der Nummer des räumlichen Datenflusses, der orthogonalen Abbildungsmatrix und dem empfangenen LTF, des Frequenzbereichskanalschätzwertes, der dem räumlichen Datenfluss entspricht.

15. Vorrichtung nach Anspruch 14, wobei die Verarbeitungseinheit (502) konfiguriert ist zum: Ermitteln einer Fensterfunktion gemäß dem zyklischen Verschiebeparameter, der maximalen Anzahl von räumlichen Datenflüssen, die von einem einzigen OFDM-Symbol unterstützt werden kann, und der Länge N der ersten Zeitbereichssequenz; Zusammenführen des empfangenen LTF gemäß der Nummer des räumlichen Datenflusses und der orthogonalen Abbildungsmatrix; Erhalten einer zweiten geschätzten Zeitbereichssequenz gemäß einem LTF, das nach dem Zusammenführen erhalten wurde; Ausführen einer Fourier-Transformation an der zweiten geschätzten Zeitbereichssequenz, um eine erste geschätzte Frequenzbereichssequenz zu erhalten; Extrahieren aus der ersten Frequenzbereichssequenz mindestens einer zweiten geschätzten Frequenzbereichssequenz, die Standorten und einer Anzahl entspricht, die von aufeinanderfolgenden verfügbaren Teilträgern stammen, und dem Empfangsende entsprechen; Ausführen einer inversen Fourier-Transformation an der mindestens einen zweiten geschätzten Frequenzbereichssequenz, um mindestens eine dritte geschätzte Zeitbereichssequenz zu erhalten; Verarbeiten der mindestens einen dritten Zeitbereichssequenz und der ersten Zeitbereichssequenz, indem die Fensterfunktion verwendet wird, um mindestens eine vierte geschätzte Zeitbereichssequenz zu erhalten; und separates Ausführen einer Fourier-Transformation an der mindestens einen vierten geschätzten Zeitbereichssequenz, um den Frequenzbereichskanalschätzwert zu erhalten, der dem räumlichen Datenfluss entspricht.

**Revendications**

1. Procédé d'envoi de données, comprenant les étapes consistant à :

effectuer (101) une transformée de Fourier sur une première séquence de domaine temporel pour obtenir une première séquence de domaine fréquentiel, la première séquence de domaine temporel étant une séquence Zadoff-Chu, une séquence Frank, une séquence multiphase Golomb ou une séquence Chirp, et une longueur N de la première séquence de domaine temporel correspondant à une quantité de sous-porteuses disponibles consécutives ou à une quantité de sous-porteuses contenues dans un bloc de ressources ;
déterminer (102), en fonction d'un retard multitrajet maximal d'un canal d'émission système, d'une largeur de bande du canal et d'une quantité de sous-porteuses $N_{FFT}$, une quantité maximale de flux spatiaux qui peut être prise en charge par un symbole de multiplexage par répartition orthogonale de la fréquence, OFDM, ce qui comprend les opérations consistant à : diviser la quantité de sous-porteuses $N_{FFT}$ par la largeur de bande du canal pour obtenir une période de transformée de Fourier discrète inverse, IDFT, d'un symbole OFDM ; et diviser la période IDFT du symbole OFDM par le retard multitrajet maximal du canal d'émission système pour obtenir la quantité maximale de flux spatiaux qui peut être prise en charge par un seul symbole OFDM ;

déterminer (103), dans une table de configuration de paramètres, en fonction d'une quantité totale de flux spatiaux, un paramètre de décalage cyclique correspondant à chaque flux spatial, le paramètre de décalage cyclique représentant une valeur de décalage de séquence temporelle de la première séquence de domaine temporel ;

obtenir (104) un champ d'apprentissage long, LTF, en fonction de la première séquence de domaine fréquentiel, de la quantité maximale de flux spatiaux et du paramètre de décalage cyclique, ce qui comprend les opérations consistant à obtenir une deuxième séquence de domaine fréquentiel de chaque flux spatial en fonction de la première séquence de domaine fréquentiel, de la quantité maximale de flux spatiaux et du paramètre de décalage cyclique, effectuer une transformée de Fourier inverse sur la deuxième séquence de domaine fréquentiel pour obtenir une deuxième séquence de domaine temporel correspondant à chaque flux spatial ; et additionner les deuxièmes séquences de domaine temporel correspondant à tous les flux spatiaux, afin d'obtenir le LTF, la deuxième séquence de domaine fréquentiel de chaque flux spatial contenant des séquences de domaine fréquentiel de tous les symboles OFDM de chaque flux spatial ; et

envoyer (105) le LTF et des informations d'indication à chaque extrémité de réception, les informations d'indication contenant un numéro d'un flux spatial attribué à chaque extrémité de réception.

2. Procédé selon la revendication 1, dans lequel les informations d'indication contiennent également des données de symboles OFDM de chaque extrémité de réception, et la quantité de symboles OFDM est obtenue par l'exécution de l'étape suivante consistant à :

déterminer la quantité de symboles OFDM en fonction de la quantité totale de flux spatiaux et de la quantité maximale de flux spatiaux.

3. Procédé selon la revendication 1 ou 2, le procédé comprenant également les étapes consistant à :

déterminer, dans la table de configuration de paramètres, en fonction de la quantité totale de flux spatiaux, une matrice de mise en correspondance orthogonale correspondant à chaque flux spatial ; dans lequel procédé l'étape consistant à obtenir (104) un champ d'apprentissage long LTF en fonction de la première séquence de domaine fréquentiel, de la quantité maximale de flux spatiaux et du paramètre de décalage cyclique consiste à :

obtenir la deuxième séquence de domaine fréquentiel de chaque flux spatial en fonction de la première séquence de domaine fréquentiel, de la quantité maximale de flux spatiaux, du paramètre de décalage cyclique et de la matrice de mise en correspondance orthogonale.

4. Procédé selon l'une quelconque des revendications 1 à 3, dans lequel la table de configuration de paramètres contient une correspondance entre le paramètre de décalage cyclique et chaque flux spatial appartenant à la quantité totale de flux spatiaux.

5. Procédé d'estimation de canal, comprenant les étapes consistant à :

recevoir (201) un champ d'apprentissage long, LTF, et des informations d'indication qui sont envoyées par une extrémité d'émission, les informations d'indication contenant un numéro d'un flux spatial attribué à une extrémité de réception ;

obtenir (202) une quantité totale de flux spatiaux et une quantité maximale de flux spatiaux qui peuvent être prises en charge par un symbole de multiplexage par répartition orthogonale de la fréquence, OFDM, ce qui comprend les opérations consistant à : diviser la quantité de sous-porteuses $N_{FFT}$ par la largeur de bande du canal pour obtenir une période de transformée de Fourier discrète inverse, IDFT, d'un symbole OFDM ; et diviser la période IDFT du symbole OFDM par le retard multitrajet maximal du canal d'émission système pour obtenir la quantité maximale de flux spatiaux qui peut être prise en charge par un seul symbole OFDM, ou

recevoir la quantité totale de flux spatiaux envoyés par l'extrémité d'émission et la quantité maximale de flux spatiaux qui peut être prise en charge par un seul symbole ;

déterminer (203), dans une table de configuration de paramètres, en fonction de la quantité totale de flux spatiaux et du numéro du flux spatial, un paramètre de décalage cyclique correspondant au flux spatial, le paramètre de décalage cyclique représentant une valeur de décalage de séquence temporelle d'une première séquence de domaine temporel, et la première séquence de domaine temporel étant une séquence Zadoff-Chu, une séquence Frank, une séquence multiphase Golomb ou une séquence Chirp ; et

déterminer (204), en fonction du paramètre de décalage cyclique, de la quantité maximale de flux spatiaux, de la première séquence de domaine temporel, d'une longueur N de la première séquence de domaine temporel, du numéro du flux spatial et du LTF reçu, une valeur d'estimation de canal de domaine fréquentiel correspondant au flux spatial.

6. Procédé selon la revendication 5, le procédé comprenant également l'étape consistant à :

déterminer, dans la table de configuration de paramètres, en fonction de la quantité totale de flux spatiaux et du numéro du flux spatial, une matrice de mise en correspondance orthogonale correspondant au flux spatial ; et dans lequel l'étape consistant à déterminer (204), en fonction du paramètre de décalage cyclique, de la quantité maximale de flux spatiaux, de la première séquence de domaine temporel, d'une longueur N de la première séquence de domaine temporel, du numéro du flux spatial et du LTF reçu, une valeur d'estimation de canal de domaine fréquentiel correspondant au flux spatial consiste à :

déterminer, en fonction du paramètre de décalage cyclique, de la quantité maximale de flux spatiaux, de la première séquence de domaine temporel, de la longueur N de la première séquence de domaine temporel, du numéro du flux spatial, de la matrice de mise en correspondance orthogonale et du LTF reçu, la valeur d'estimation de canal de domaine fréquentiel correspondant au flux spatial.

7. Procédé selon la revendication 6, dans lequel l'étape consistant à déterminer, en fonction du paramètre de décalage cyclique, de la quantité maximale de flux spatiaux qui peut être prise en charge par un seul symbole OFDM, de la première séquence de domaine temporel, de la longueur N de la première séquence de domaine temporel, de la matrice de mise en correspondance orthogonale et du LTF reçu, la valeur d'estimation de canal de domaine fréquentiel correspondant au flux spatial consiste à :

déterminer une fonction de fenêtre en fonction du paramètre de décalage cyclique, de la quantité maximale de flux spatiaux qui peut être prise en charge par un seul symbole OFDM et de la longueur N de la première séquence de domaine temporel ;
fusionner le LTF reçu en fonction du numéro du flux spatial et de la matrice de mise en correspondance orthogonale ;
obtenir une deuxième séquence de domaine temporel estimée en fonction d'un LTF obtenu après la fusion ;
effectuer une transformée de Fourier sur la deuxième séquence de domaine temporel estimée pour obtenir une première séquence de domaine fréquentiel estimée ;
extraire, de la première séquence de domaine fréquentiel, au moins une deuxième séquence de domaine fréquentiel estimée correspondant à des emplacements et à une quantité qui sont ceux de sous-porteuses disponibles consécutives et qui correspondent à l'extrémité de réception ;
effectuer une transformée de Fourier inverse sur l'au moins une deuxième séquence de domaine fréquentiel estimée pour obtenir au moins une troisième séquence de domaine temporel estimée ;
traiter l'au moins une troisième séquence de domaine temporel et la première séquence de domaine temporel au moyen de la fonction de fenêtre, pour obtenir au moins une quatrième séquence de domaine temporel estimée ; et
effectuer séparément une transformée de Fourier sur l'au moins une quatrième séquence de domaine temporel estimée pour obtenir la valeur d'estimation de canal de domaine fréquentiel correspondant au flux spatial.

8. Procédé selon l'une quelconque des revendications 5 à 7, dans lequel la longueur N de la première séquence de domaine temporel est spécifiquement une quantité de sous-porteuses disponibles consécutives du canal ou dans lequel une quantité de sous-porteuses contenues dans un bloc de ressources est égale à la longueur N.

9. Procédé selon l'une quelconque des revendications 5 à 8, dans lequel la table de configuration de paramètres contient une correspondance entre le paramètre de décalage cyclique et chaque flux spatial appartenant à la quantité totale de flux spatiaux.

10. Appareil d'envoi de données, comprenant :

une unité de traitement (301), configurée pour : effectuer une transformée de Fourier sur une première séquence de domaine temporel pour obtenir une première séquence de domaine fréquentiel, la première séquence de domaine temporel étant une séquence Zadoff-Chu, une séquence Frank, une séquence multiphase Golomb ou une séquence Chirp, et une longueur N de la première séquence de domaine temporel correspondant à une quantité de sous-porteuses disponibles consécutives ou à une quantité de sous-porteuses contenues dans un bloc de ressources ; déterminer, en fonction d'un retard multitrajet maximal d'un canal d'émission système, d'une largeur de bande du canal et d'une quantité de sous-porteuses $N_{FFT}$, une quantité maximale de flux spatiaux qui peut être prise en charge par un symbole de multiplexage par répartition orthogonale de la fréquence, OFDM, ce qui comprend les opérations consistant à : diviser la quantité de sous-porteuses $N_{FFT}$ par la largeur de bande du canal pour obtenir une période de transformée de Fourier discrète inverse, IDFT, d'un symbole OFDM ; et diviser la période IDFT du symbole OFDM par le retard multitrajet maximal du canal d'émission système pour obtenir la quantité maximale de flux spatiaux qui peut être prise en charge par un seul symbole OFDM ; déterminer, dans une table de configuration de paramètres, en fonction d'une quantité totale de flux spatiaux, un paramètre de décalage cyclique correspondant à chaque flux spatial, le paramètre de décalage cyclique représentant une valeur de décalage de séquence temporelle de la première séquence de domaine temporel ; obtenir un champ d'apprentissage long, LTF, en fonction de la première séquence de domaine fréquentiel, de la quantité maximale de flux spatiaux et du paramètre de décalage cyclique, ce qui comprend les opérations consistant à obtenir une deuxième séquence de domaine fréquentiel de chaque flux spatial en fonction de la première séquence de domaine fréquentiel, de la quantité maximale de flux spatiaux et du paramètre de décalage cyclique, effectuer une transformée de Fourier inverse sur la deuxième séquence de domaine fréquentiel pour obtenir une deuxième séquence de domaine temporel correspondant à chaque flux spatial ; et additionner les deuxièmes séquences de domaine temporel correspondant à tous les flux spatiaux, afin d'obtenir le LTF, la deuxième séquence de domaine fréquentiel de chaque flux spatial contenant des séquences de domaine fréquentiel de tous les symboles OFDM de chaque flux spatial ; et

une unité d'envoi (302), configurée pour envoyer le LTF et des informations d'indication à chaque extrémité de réception, les informations d'indication contenant un numéro d'un flux spatial attribué à chaque extrémité de réception.

11. Appareil selon la revendication 10, dans lequel l'unité de traitement (301) est également configurée pour déterminer une quantité de symboles OFDM en fonction de la quantité totale de flux spatiaux et de la quantité maximale de flux spatiaux.

12. Appareil selon la revendication 10 ou 11, dans lequel l'unité de traitement (301) est également configurée pour : déterminer, dans la table de configuration de paramètres, en fonction de la quantité totale de flux spatiaux, une matrice de mise en correspondance orthogonale correspondant à chaque flux spatial ; et obtenir la deuxième séquence de domaine fréquentiel de chaque flux spatial en fonction de la première séquence de domaine fréquentiel, de la quantité maximale de flux spatiaux, du paramètre de décalage cyclique et de la matrice de mise en correspondance orthogonale.

13. Appareil d'estimation de canal, comprenant :

une unité de réception (501), configurée pour recevoir un champ d'apprentissage long, LTF, et des informations d'indication qui sont envoyées par une extrémité d'émission, les informations d'indication contenant un numéro d'un flux spatial attribué à une extrémité de réception ; et

une unité de traitement (502), configurée pour : obtenir une quantité totale de flux spatiaux et une quantité maximale de flux spatiaux qui peuvent être prises en charge par un symbole de multiplexage par répartition orthogonale de la fréquence, OFDM, ce qui comprend les opérations consistant à : diviser la quantité de sous-porteuses $N_{FFT}$ par la largeur de bande du canal pour obtenir une période de transformée de Fourier discrète inverse, IDFT, d'un symbole OFDM ; et diviser la période IDFT du symbole OFDM par le retard multitrajet maximal du canal d'émission système pour obtenir la quantité maximale de flux spatiaux qui peut être prise en charge par un seul symbole OFDM, ou recevoir la quantité totale de flux spatiaux envoyés par l'extrémité d'émission et la quantité maximale de flux spatiaux qui peut être prise en charge par un seul symbole ; déterminer, dans une table de configuration de paramètres, en fonction de la quantité totale de flux spatiaux et du numéro du flux spatial, un paramètre de décalage cyclique correspondant au flux spatial, le paramètre de décalage cyclique représentant une valeur de décalage de séquence temporelle d'une première séquence de domaine temporel, et la première séquence de domaine temporel étant une séquence Zadoff-Chu, une séquence Frank, une séquence multiphase Golomb ou une séquence Chirp ;

et déterminer, en fonction du paramètre de décalage cyclique, de la quantité maximale de flux spatiaux, de la première séquence de domaine temporel, d'une longueur N de la première séquence de domaine temporel, du numéro du flux spatial et du LTF reçu, une valeur d'estimation de canal de domaine fréquentiel correspondant au flux spatial.

**14.** Appareil selon la revendication 13, dans lequel l'unité de traitement (502) est également configurée pour : déterminer, dans la table de configuration de paramètres, en fonction de la quantité totale de flux spatiaux et du numéro du flux spatial, une matrice de mise en correspondance orthogonale correspondant au flux spatial ; et déterminer, en fonction du paramètre de décalage cyclique, de la quantité maximale de flux spatiaux, de la première séquence de domaine temporel, de la longueur N de la première séquence de domaine temporel, du numéro du flux spatial, de la matrice de mise en correspondance orthogonale et du LTF reçu, la valeur d'estimation de canal de domaine fréquentiel correspondant au flux spatial.

**15.** Appareil selon la revendication 14, dans lequel l'unité de traitement (502) est configurée pour : déterminer une fonction de fenêtre en fonction du paramètre de décalage cyclique, de la quantité maximale de flux spatiaux qui peut être prise en charge par un seul symbole OFDM et de la longueur N de la première séquence de domaine temporel ; fusionner le LTF reçu en fonction du numéro du flux spatial et de la matrice de mise en correspondance orthogonale ; obtenir une deuxième séquence de domaine temporel estimée en fonction d'un LTF obtenu après la fusion ; effectuer une transformée de Fourier sur la deuxième séquence de domaine temporel estimée pour obtenir une première séquence de domaine fréquentiel estimée ; extraire, de la première séquence de domaine fréquentiel, au moins une deuxième séquence de domaine fréquentiel estimée correspondant à des emplacements et à une quantité qui sont ceux de sous-porteuses disponibles consécutives et qui correspondent à l'extrémité de réception ; effectuer une transformée de Fourier inverse sur l'au moins une deuxième séquence de domaine fréquentiel estimée pour obtenir au moins une troisième séquence de domaine temporel estimée ; traiter l'au moins une troisième séquence de domaine temporel et la première séquence de domaine temporel au moyen de la fonction de fenêtre, pour obtenir au moins une quatrième séquence de domaine temporel estimée ; et effectuer séparément une transformée de Fourier sur l'au moins une quatrième séquence de domaine temporel estimée pour obtenir la valeur d'estimation de canal de domaine fréquentiel correspondant au flux spatial.

FIG. 1

Perform N-point Fourier transform on a first time domain sequence to obtain a first frequency domain sequence, where the first time domain sequence is a sequence with an autocorrelation property — 101

Determine, according to a maximum multipath delay of a system transmission channel, bandwidth of the channel, and a subcarrier quantity $N_{FFT}$, a maximum quantity of spatial flows that can be supported by a single symbol — 102

Determine, in a parameter configuration table according to a total quantity of spatial flows, a cyclic shift parameter corresponding to each spatial flow, where the cyclic shift parameter represents a time sequence shift value of the first time domain sequence — 103

Obtain an LTF according to the first frequency domain sequence, the maximum quantity of spatial flows, and the cyclic shift parameter — 104

Send the LTF and indication information to each receive end, where the indication information includes a number of a spatial flow allocated to each receive end — 105

FIG. 2

Receive a long training field LTF and indication information that are sent by a transmit end, where the indication information includes a number of a spatial flow allocated to a receive end — 201

Obtain a total quantity of spatial flows and a maximum quantity of spatial flows that can be supported by a single symbol — 202

Determine, in a parameter configuration table according to the total quantity of spatial flows and the number of the spatial flow, a cyclic shift parameter corresponding to the spatial flow — 202

Determine, according to the cyclic shift parameter, the maximum quantity of spatial flows, a first time domain sequence, a length N of the first time domain sequence, the number of the spatial flow, and the received LTF, a frequency domain channel estimation value corresponding to the spatial flow — 204

FIG. 3

301

302

Processing unit

Sending unit

FIG. 4

401

404

Processor

Memory

400

405

Bus interface

403

Receiver

402

Transmitter

FIG. 5

501

502

Receiving unit

Processing unit

FIG. 6

602

604

Processor

Memory

600

601

605

Bus interface

Receiver

Transmitter

603

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011071300 A2